(19) Europäisches Patentamt
European Patent Office
Office européen des brevets

(11) Veröffentlichungsnummer: **0 331 933**
**A2**

# (12) EUROPÄISCHE PATENTANMELDUNG

(21) Anmeldenummer: **89102554.6**

(51) Int. Cl.⁴: **C09K 19/42**

(22) Anmeldetag: **15.02.89**

(30) Priorität: **23.02.88 CH 672/88**

(43) Veröffentlichungstag der Anmeldung:
**13.09.89 Patentblatt 89/37**

(84) Benannte Vertragsstaaten:
**CH DE FR GB IT LI NL**

(71) Anmelder: **F. HOFFMANN-LA ROCHE AG**
**Postfach 3255**
**CH-4002 Basel(CH)**

(72) Erfinder: **Buchecker, Richard, Dr.**
**Felsenstrasse 10**
**CH-8008 Zürich(CH)**
Erfinder: **Schadt, Martin, Dr.**
**Liestalerstrasse 77**
**CH-4411 Seltisberg(CH)**

(74) Vertreter: **Zimmermann, Hans, Dr. et al**
**Grenzacherstrasse 124 Postfach 3255**
**CH-4002 Basel(CH)**

## (54) Flüssigkristalline Gemische mit niedriger optischer Anisotropie.

(57) Flüssigkristallines Gemisch für elektro-optische Anwendungen enthaltend eine oder mehrere Verbindungen der allgemeinen Formel

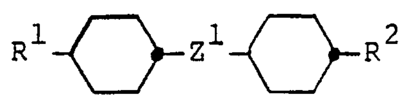

I

worin $R^1$ $C_1$-$C_{12}$-Alkyl oder $C_2$-$C_{12}$-Alkenyl bezeichnet; $R^2$ $C_1$-$C_{12}$-Alkyl, $C_1$-$C_{12}$-Alkoxy, $C_2$-$C_{12}$-Alkenyl, $C_3$-$C_{12}$-Alkenyloxy oder Cyano bedeutet; und $Z^1$ eine einfache Kovalenzbindung oder die Gruppe $-CH_2-CH_2-$ darstellt,
und eine oder mehrere Verbindungen der allgemeinen Formel

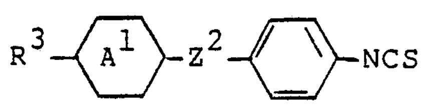

II

worin $R^3$ $C_1$-$C_{12}$-Alkyl oder $C_2$-$C_{12}$-Alkenyl bedeutet; Ring $A^1$ trans-1,4-Cyclohexylen, trans-1,3-Dioxan-2,5-diyl, Pyridin-2,5-diyl oder Pyrimidin-2,5-diyl darstellt; und $Z^2$ eine einfache Kovalenzbindung oder, wenn Ring $A^1$ trans-1,4-Cyclohexylen darstellt, auch die Gruppe $-CH_2CH_2-$ bezeichnet,
in einem Gewichtsverhältnis der Verbindungen der Formel I zu den Verbindungen der Formel II von 2:1 bis 20:1.

EP 0 331 933 A2

## Flüssigkristalline Gemische mit niedriger optischer Anisotropie

Die vorliegende Erfindung betrifft ein flüssigkristallines Gemisch mit niedriger optischer Anisotropie und dessen Verwendung für elektrooptische Zwecke.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("super-birefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellungsspannungen und einen hohen Kontrast ergeben. Weiterhin sollten sie bei üblichen Betriebstemperturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielweise sollten Materialien für Zellen mit verdrillt nematischer Struktur eine positive dielektrische Anisotropie und eine möglichst geringe elektrische Leitfähigkeit aufweisen.

Für verschiedene Anwendungen sind Flüssigkristallmaterialien mit niedriger optischer Anisotropie erwünscht. Beispielsweise sollte die optische Anisotropie niedrig sein für TN-Zellen, die im ersten Transmissionsminimum betrieben werden, und insbesondere im Fall von aktiv adressierten Flüssigkristallanzeigen, wie MIM-Anwendungen (Metall-Isolator-Metall) oder TFT-Anwendungen ("thin film transistor" = Dünnfilmtransistor) in Fernsehgeräten. Ferner sollte in STN-Zellen und insbesondere in OMI-Zellen der Wert von $\Delta n \bullet d$ (wobei $\Delta n$ die optische Anisotropie und d den Plattenabstand bezeichnen) relativ niedrig sein. Weiterhin wird das optische Erscheinungsbild in Gast/Wirt-Anwendungen weniger beeinflusst, wenn das Flüssigkristallmaterial eine niedrige optische Anisotropie aufweist.

Flüssigkristallmaterialien mit niedriger optischer Anisotropie besitzen jedoch in der Regel eine relativ hohe Viskosität und ergeben relativ lange Ansprechzeiten. Zudem besitzen die bekannten flüssigkristallinen Verbindungen mit niedriger optischer Ansiotropie oft hochgeordnete smektische Phasen und führen oft zu einer unerwünschten Erhöhung der Schwellenspannung.

Die Erfindung betrifft ein flüssigkristallines Gemisch, welches dadurch gekennzeichnet ist, dass es eine oder mehrere Verbindungen der allgemeinen Formel

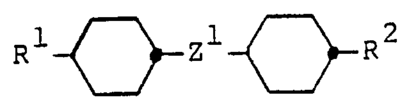

I

worin $R^1$ $C_1$-$C_{12}$-Alkyl oder $C_2$-$C_{12}$-Alkenyl bezeichnet; $R^2$ $C_1$-$C_{12}$-Alkyl, $C_1$-$C_{12}$-Alkoxy, $C_2$-$C_{12}$-Alkenyl, $C_3$-$C_{12}$-Alkenyloxy oder Cyano bedeutet; und $Z^1$ eine einfache Kovalenzbindung oder die Gruppe $-CH_2-CH_2-$ darstellt,

und eine oder mehrere Verbindungen der allgemeinen Formel

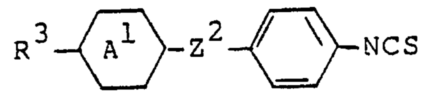

II

worin $R^3$ $C_1$-$C_{12}$-Alkyl oder $C_2$-$C_{12}$-Alkenyl bedeutet; Ring $A^1$ trans-1,4-Cyclohexylen, trans-1,3-Dioxan-2,5-diyl, Pyridin-2,5-diyl oder Pyrimidin-2,5-diyl darstellt; und $Z^2$ eine einfache Kovalenzbindung oder, wenn Ring $A^1$ trans-1,4-Cyclohexylen darstellt, auch die Gruppe $-CH_2CH_2-$bezeichnet,

enthält und das Gewichtsverhältnis der Verbindungen der Formel I zu den Verbindungen der Formel II von 2:1 bis 20:1 beträgt.

Es wurde gefunden, dass bereits ein relativ geringer Anteil an Verbindung der Formel II im Gemisch mit einer oder mehreren Verbindungen der Formel I zu einer beträchtlichen Verbesserung der Ansprechzeiten und zu niedrigen Schwellenspannungen führt. Die Verbindungen der Formel II besitzen eine hohe optische Anisotropie. Die optische Anisotropie des Gemisches wird jedoch im angegebenen Mischungsbereich durch die Verbindungen der Formel II nur relativ wenig erhöht, während die Ansprechzeiten und die Schwellenspannung deutlich verbessert werden. Höhere Mengen an Verbindung der Formel II ergeben im allgemeinen nur noch eine geringfügige Verbesserung der Ansprechzeiten und der Schwellenspannung, aber eine vergleichsweise starke Erhöhung der optischen Anisotropie. Die Erfindung ermöglicht somit Flüssigkristallgemische mit niedriger optischer Anisotropie und kurzen Schaltzeiten.

Durch Zusatz von Verbindung der Formel II wird ferner häufig der Schmelzpunkt des Gemisches gesenkt. Die Verbindungen der Formeln I und II sind farblos, stabil und untereinander und mit anderen Flüssigkristallkomponenten gut mischbar.

Der Ausdruck "$C_1$-$C_{12}$-Alkyl" umfasst geradkettige und verzweigte Alkylgruppen mit 1-12 Kohlenstoffatomen, insbesondere die geradkettigen Gruppen Methyl, Aethyl, Propyl, Butyl, Pentyl, Hexyl, Heptyl, Octyl, Nonyl, Decyl, Undecyl und Dodecyl. Gruppen mit 1-7 Kohlenstoffatomen sind im allgemeinen bevorzugt.

Der Ausdruck "$C_1$-$C_{12}$-Alkoxy" umfasst geradkettige und verzweigte Alkoxygruppen mit 1-12 Kohlenstoffatomen, insbesondere die geradkettigen Gruppen Methoxy, Aethoxy, Propyloxy, Butyloxy, Pentyloxy, Hexyloxy, Heptyloxy, Octyloxy, Nonyloxy, Decyloxy, Undecyloxy und Dodecyloxy. Gruppen mit 1-7 Kohlenstoffatomen sind im allgemeinen bevorzugt.

Der Ausdruck "$C_2$ -$C_{12}$-Alkenyl" umfasst geradkettige und verzweigte Alkenylgruppen mit 2-12 Kohlenstoffatomen, insbesondere die geradkettigen Gruppen. Bevorzugte Alkenylgruppen sind $C_2$-$C_{12}$-1E-Alkenyl, $C_4$-$C_{12}$-3E-Alkenyl, $C_5$-$C_{12}$-4-Alkenyl, $C_6$-$C_{12}$-5-Alkenyl, $C_7$-$C_{12}$-6-Alkenyl und $C_8$-$C_{12}$-7-Alkenyl, insbesondere $C_2$-$C_{12}$-1E-Alkenyl, $C_4$-$C_{12}$-3E-Alkenyl und $C_5$-$C_{12}$-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 1E-Octenyl, 1E-Nonenyl, 3-Butenyl, 3E-Pentenyl, 3E-Hexenyl, 3E-Heptenyl, 3E-Octenyl, 3E-Nonenyl, 4-Pentenyl, 4Z-Hexenyl, 4E-Hexenyl, 4Z-Heptenyl, 4Z-Octenyl, 4Z-Nonenyl, 5-Hexenyl, 6-Heptenyl, 7-Octenyl und dergleichen. Gruppen mit bis zu 7 Kohlenstoffatomen sind im allgemeinen bevorzugt.

Der Ausdruck "$C_3$ -$C_{12}$-Alkenyloxy" umfasst geradkettige und verzweigte Alkenyloxygruppen mit 3-12 Kohlenstoffatomen, insbesondere die geradkettigen Gruppen. Bevorzugte Alkenyloxygruppen sind $C_3$-$C_{12}$-2E-Alkenyloxy, $C_4$-$C_{12}$-3-Alkenyloxy, $C_5$-$C_{12}$-4-Alkenyloxy, $C_6$-$C_{12}$-5-Alkenyloxy, $C_7$-$C_{12}$-6-Alkenyloxy, $C_8$-$C_{12}$-7-Alkenyloxy und $C_9$-$C_{12}$-8-Alkenyloxy, insbesondere $C_3$-$C_{12}$-2E-Alkenyloxy und $C_4$ -$C_{12}$-3-Alkenyloxy. Beispiele bevorzugter Alkenyloxygruppen sind Allyloxy, 2E-Butenyloxy, 2E-Pentenyloxy, 2E-Hexenyloxy, 2E-Heptenyloxy, 2E-Octenyloxy, 2E-Nonenyloxy, 3-Butenyloxy, 3Z-Pentenyloxy, 3E-Pentenyloxy, 3Z-Hexenyloxy, 3Z-Heptenyloxy, 3Z-Octenyloxy, 3Z-Nonenyloxy, 4-Pentenyloxy, 5-Hexenyloxy, 6-Heptenyloxy, 7-Octenyloxy und dergleichen. Gruppen mit bis zu 7 Kohlenstoffatomen sind im allgemeinen bevorzugt.

Die Verbindungen der Formeln I und II sind bekannte oder Analoge bekannter Verbindungen. Geeignete Methoden zur Herstellung dieser Verbindungen sind dem Fachmann bekannt z.B. aus GB-A-2093057, DE-A-3226051, JP-A-59-70624, JP-A-60-69049, EP-A-122389, EP-A-126883, EP-A-167912, EP-A-168683, EP-A-169327, EP-A-172360, EP-A-195974 und EP-A-242716. Die Herstellung alkenylsubstituierter Verbindungen der Formel I wird ferner in den Synthesebeispielen weiter veranschaulicht.

Formel I umfasst die unpolaren bzw. schwach polaren Verbindungen der allgemeinen Formel

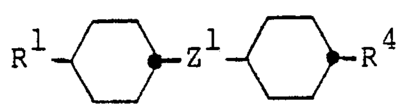

Ia

worin $R^4$ $C_1$-$C_{12}$-Alkyl, $C_1$-$C_{12}$-Alkoxy, $C_2$-$C_{12}$-Alkenyl oder $C_3$-$C_{12}$-Alkenyloxy bedeutet, und $R^1$ und $Z^1$ die in Formel I gegebenen Bedeutungen haben,
und die Cyanoverbindungen der allgemeinen Formel

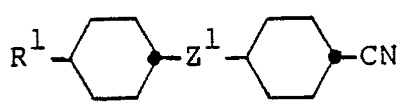

Ib

worin $R^1$ und $Z^1$ die in Formel I gegebenen Bedeutungen haben.

Bevorzugte Verbindungen der Formel I sind die Verbindungen der Formel Ib ($R^2$ = Cyano) sowie diejenigen Verbindungen der Formel I bzw. Ia, worin $R^2$ bzw. $R^4$ $C_1$-$C_{12}$-Alkyl, $C_1$-$C_{12}$-Alkoxy, $C_2$-$C_{12}$-1E-Alkenyl, $C_4$-$C_{12}$-3E-Alkenyl, $C_5$-$C_{12}$-4-Alkenyl, $C_3$-$C_{12}$-2E-Alkenyloxy oder $C_4$-$C_{12}$-3-Alkenyloxy, insbesondere $C_1$-$C_7$-Alkyl, $C_1$-$C_7$ -Alkoxy, $C_2$-$C_7$-1E-Alkenyl, $C_4$-$C_7$ -3E-Alkenyl, $C_5$-$C_7$ -4-Alkenyl, $C_3$-$C_7$-2E-Alkenyloxy oder $C_4$-$C_7$-3-Alkenyloxy bedeuten. $R^1$ in den Formeln I, Ia und Ib steht vorzugsweise für $C_1$-$C_{12}$-Alkyl, $C_2$-$C_{12}$-1E-Alkenyl, $C_4$-$C_{12}$-3E-Alkenyl oder $C_5$-$C_{12}$-4-Alkenyl, insbesondere für $C_1$-$C_7$-Alkyl, $C_2$-$C_7$-1E-Alkenyl, $C_4$-$C_7$-3E-Alkenyl oder $C_5$-$C_7$-4-Alkenyl.

Bevorzugte Verbindungen der Formel II sind diejenigen, worin Ring $A^1$ trans-1,4-Cyclohexylen oder trans-1,3-Dioxan-2,5-diyl darstellt und $Z^2$ eine einfache Kovalenzbindung bedeutet, sowie diejenigen, worin Ring $A^1$ trans-1,4-Cyclohexylen darstellt und $Z^2$ die Gruppe $-CH_2CH_2-$ bezeichnet. $R^3$ steht vorzugsweise für $C_1$-$C_{12}$-Alkyl, $C_2$-$C_{12}$-1E-Alkenyl, $C_4$-$C_{12}$-3E-Alkenyl oder $C_5$-$C_{12}$-4-Alkenyl, insbesondere für $C_1$-$C_7$-Alkyl, $C_2$-$C_7$-1E-Alkenyl, $C_4$-$C_7$-3E-Alkenyl oder $C_5$-$C_7$-4-Alkenyl. Wenn Ring $A^1$ Pyrimidin-2,5-diyl darstellt, bedeutet $R^3$ im allgemeinen bevorzugt einen Alkyl-, 3E-Alkenyl- oder 4-Alkenylrest.

Durch geeignete Wahl der Bedeutungen von $R^1$, $R^2$, $R^3$, $R^4$, $Z^1$, $Z^2$ und Ring $A^1$ können die Ansprechzeiten, die Schwellenspannung, die Steilheit der Transmissionskennlinien, etc. in gewünschter Weise modifiziert. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten $k_{33}$ (bend) und $k_{11}$ (splay) im Vergleich zu Alkyl- bzw. Alkoxyresten. 4-Alkenylreste, 3-Alkenyloxyreste und dergleichen ergeben im allgemeinen tiefere Schwellenspannungen und kleinere Werte von $k_{33}/k_{11}$ im Vergleich zu Alkyl- und Alkoxyresten. Eine Gruppe $-CH_2CH_2-$ in $Z^1$ bzw. $Z^2$ führt im allgemeinen zu höheren Werten von $k_{33}/k_{11}$ im Vergleich zu einer einfachen Kovalenzbindung. Die Verwendung eines Dioxan-, Pyridin- oder Pyrimidinringes für Ring $A^1$ ergibt in der Regel tiefere Werte von $k_{33}/k_{11}$ im Vergleich zum Cyclohexanring und meist auch eine tiefere Schwellenspannung. Höhere Werte von $k_{33}/k_{11}$ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II hängt weitgehend von den gewünschten Eigenschaften, von der Wahl der Komponenten der Formeln I und II und von der Wahl weiterer gegebenenfalls vorhandener Komponenten ab. Geeignete Mengenverhältnisse innerhalb des oben angegebenen Bereichs können von Fall zu Fall leicht ermittelt werden. Im allgemeinen ist ein Verhältnis des Gesamtgewichtes an Verbindungen der Formel I zum Gesamtgewicht an Verbindungen der Formel II von etwa 3:1 bis 10:1 bevorzugt.

Die Gesamtmenge an Verbindungen der Formeln I und II in den erfindungsgemässen Gemischen ist nicht kritisch. Die Gemische können daher eine oder mehrere weitere Komponenten enthalten zwecks Optimierung verschiedener Eigenschaften. Der beobachtbare Effekt auf die Ansprechzeiten und die Schwellenspannung ist jedoch in der Regel umso grösser je höher die Gesamtkonzentration an Verbindungen der Formeln I und II ist.

Bevorzugte erfindungsgemässe Gemische sind daher diejenigen, worin der Anteil an Verbindungen der Formeln I und II zusammen im Gesamtgemischt mindestens 35 Gew.-% beträgt, und insbesondere diejenigen, worin der Anteil an Verbindungen der Formel I und II zusammen mindestens 50 Gew.-% beträgt. Es versteht sich, dass der Anteil auch bis zu 100 Gew.-% betragen kann.

Bevorzugte Konzentrationsbereiche für die Verbindungen der Formel I bzw. II ergeben sich aus den angegebenen Gewichtsverhältnissen und den bevorzugten Gesamtmengen. Besonders bevorzugt sind Gemische, in denen der Anteil an einer oder mehreren Verbindungen der Formel II im Gesamt gemisch 3-30 Gew.-%, insbesondere 5-20 Gew.-% beträgt. Weiterhin sind diejenigen Gemische besonders bevorzugt, in denen der Anteil an einer oder mehreren Verbindungen der Formel I im Gesamtgemisch mindestens 25 Gew.-%, insbesondere mindestens 35 Gew.-% beträgt.

Die erfindungsgemässen Gemische enthalten vorzugsweise eine oder mehrere Verbindungen der Formel Ia. Die Gesamtmenge an Verbindungen der Formel Ia im Gemisch beträgt vorzugsweise mindestens 10 Gew.-%, besonders bevorzugt mindestens 15 Gew.-%.

Die erfindungsgemässen Gemische können auch eine oder mehrere Verbindungen der Formel Ib enthalten. Die Gesamtmenge an gegebenenfalls vorhandenen Verbindungen der Formel Ib im Gemisch beträgt vorzugsweise mindestens 5 Gew.-%, besonders bevorzugt mindestens 10 Gew.-%. Enthält das erfindungsgemässe Gemisch eine oder mehrere Verbindungen der Formel Ia und eine oder mehrere Verbindungen der Formel Ib, so beträgt das Gewichtsverhältnis der Verbindungen der Formel Ia zu den Verbindungen der Formel Ib vorzugsweise mindestens 1:4, besonders bevorzugt mindestens 1:1.

Die erfindungsgemässen Gemische eignen sich insbesondere für nematische und cholesterische Anwendungen. Das Gemisch der Verbindungen der Formeln I und II kann als solches verwendet oder mit

weiteren, flüssigkristallinen und/oder nicht-flüssigkristallinen Komponenten gemischt werden. Geeignete weitere Komponenten sind dem Fachmann bekannt und zum Teil im handel erhältlich, wie z.B. Derivate von Azobenzol, Azoxybenzol, Phenylbenzoat, Cyclohexancarbonsäurephenylester, Cyclohexancarbonsäurecyclohexylester, Biphenyl, Terphenyl, Phenylcyclohexan, Cyclohexylbiphenyl, Phenylpyrimidin, Cyclohexylpyrimidin, Phenyldioxan, Cyclohexyldioxan, Cyclohexylcyclohexan, trans-4-Cyclohexyl-1-phenylcyclohexan, 1,4-Dicyclohexylbenzol, 2-Cyclohexyl-1-phenyläthan, 1,2-Dicyclohexyläthan und dergleichen.

Vorzugsweise enthalten die erfindungsgemässen Gemische neben den Verbindungen der Formeln I und II eine oder mehrere Verbindungen aus der Gruppe der Verbindungen der allgemeinen Formeln

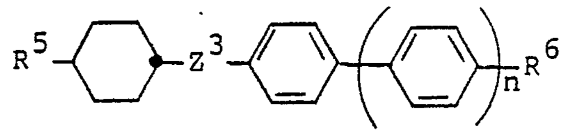
III

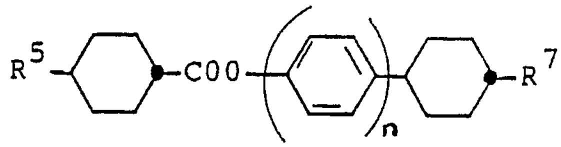
IV

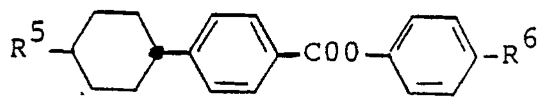
V

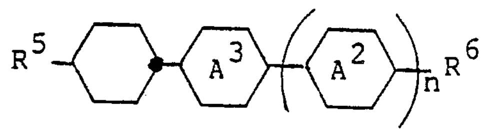
VI

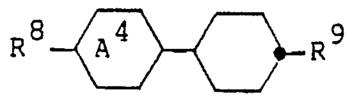
VII

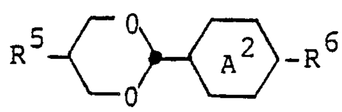
VIII

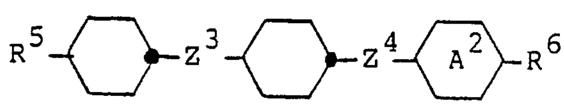
IX

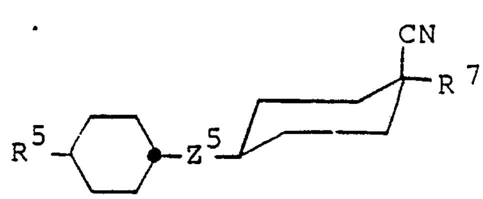
X

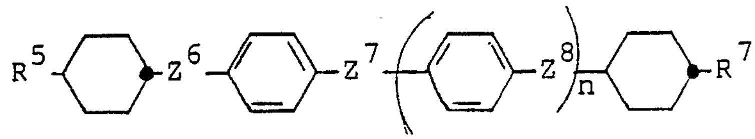

XI

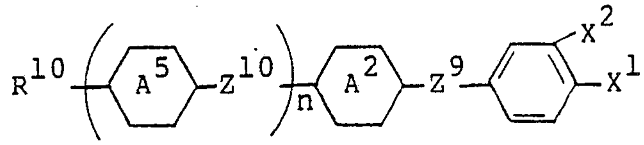

XII

worin n für die Zahl 0 oder 1 steht; $Z^3$ und $Z^4$ unabhängig voneinander eine einfache Kovalenzbindung $-CH_2CH_2-$ oder -COO- bezeichnen; $R^5$ und $R^7$ unabhängig voneinander $C_1$-$C_{12}$-Alkyl oder $C_2$-$C_{12}$-Alkenyl bedeuten; $R^6$ $C_1$-$C_{12}$-Alkyl, $C_1$-$C_{12}$-Alkoxy, $C_2$-$C_{12}$-Alkenyl, $C_3$-$C_{12}$-Alkenyloxy oder Cyano darstellt; die Ringe $A^2$ und $A^3$ unabhangig voneinander trans-1,4-Cyclohexylen oder 1,4-Phenylen darstellen; Ring $A^3$ Pyrimidin-2,5-diyl bezeichnet; $R^8$ und $R^9$ unabhängig voneinander $C_1$-$C_{12}$-Alkyl, $C_1$-$C_{12}$-Alkoxy, $C_2$-$C_{12}$-Alkenyl oder $C_3$-$C_{12}$-Alkenyloxy bedeuten; Ring $A^4$ Pyridin-2,5-diyl bezeichnet; $Z^5$ eine einfache Kovalenzbindung, $-CH_2CH_2-$, -COO- oder -OOC- darstellt; $Z^6$, $Z^7$ und $Z^8$ je eine einfache Kovalenzbindung bedeuten oder eine oder zwei der Gruppen $Z^6$, $Z^7$ und $Z^8$ auch $-CH_2CH_2-$ bedeuten; $R^{10}$ $C_1$-$C_{15}$-Alkyl, $C_4$-$C_{15}$-3E-Alkenyl, $C_5$-$C_{12}$-4-Alkenyl, $C_1$-$C_{14}$-Alkoxy, $C_3$-$C_{14}$-2E-Alkenyloxy oder $C_4$-$C_{14}$-3-Alkenyloxy bezeichnet; eine der Gruppen $Z^9$ und $Z^{10}$ eine einfache Kovalenzbindung, -COO-, -OOC-, $-CH_2CH_2-$, $-CH_2O-$ oder $-OCH_2-$ bedeutet und die andere der Gruppen $Z^9$ und $Z^{10}$ eine einfache Kovalenzbindung bedeutet; und $X^1$ Fluor oder Chlor und $X^2$ Wasserstoff, Fluor oder Chlor bezeichnen,
oder davon abgeleiteten Formeln mit fluoriertem 1,4-Phenylenring.

Bevorzugte Zusätze sind die Verbindungen der Formel III, worin n für die Zahl 0 steht, die Verbindungen der Formel IV, die Verbindungen der Formel VI, worin n für die Zahl 0 steht oder Ring $A^2$ trans-1,4-Cyclohexlen darstellt, die Verbindungen der Formeln VII-XI und die Verbindungen der Formel XII, worin $Z^{10}$ eine einfache Kovalenzbindung bedeutet und die Ringe $A^2$ und $A^5$ trans-1,4-Cyclohexylen darstellen. Besonders bevorzugte Zusätze sind die Verbindungen der Formeln IV, VI und XI, worin jeweils n für die Zahl 0 steht, die Verbindungen der Formel VIII, worin Ring $A^2$ trans-1,4-Cyclohexylen darstellt, die Verbindungen der Formel IX, worin $Z^3$ eine einfache Kovalenzbindung oder $-CH_2CH_2-$ bezeichnet und $Z^4$ eine einfache Kovalenzbindung oder -COO- bedeutet, die Verbindungen der Formel X, worin $Z^5$ eine einfache Kovalenzbindung oder $-CH_2CH_2-$bezeichnet, und die Verbindungen der Formel XII, worin $Z^{10}$ eine einfache Kovalenzbindung bedeutet und die Ringe $A^2$ und $A^5$ trans-1,4-Cyclohexylen darstellen. Die in den Formeln III-XI vorhandenen Alkyl-, Alkoxy-, Alkenyl- und Alkenyloxyreste besitzen vorzugsweise die eingangs genannten Bedeutungen.

Die erfindungsgemässen Gemische können gewünschtenfalls auch eine oder mehrere Verbindungen mit hoher optischer Anisotropie, beispielsweise aus der Gruppe der Verbindungen der allgemeinen Formeln

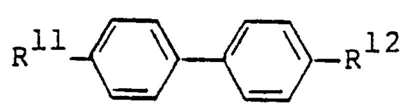

XIII

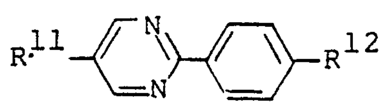

XIV

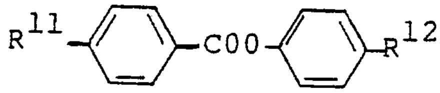

XV

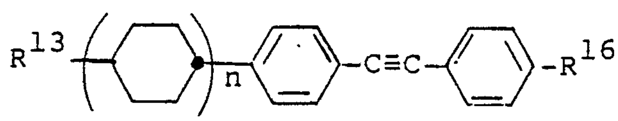

XVI

worin die Reste $R^{11}$ und $R^{12}$ unabhängig voneinander $C_1$-$C_{12}$-Alkyl, $C_1$-$C_{12}$-Alkoxy, $C_2$-$C_{12}$-Alkenyl oder $C_3$-$C_{12}$-Alkenyloxy bezeichnen oder einer der Reste $R^{11}$ und $R^{12}$ auch Cyano bezeichnet; $R^{13}$ $C_1$-$C_{12}$-Alkyl bedeutet; $R^{14}$ $C_1$-$C_{12}$-Alkyl, $C_1$-$C_{12}$-Alkoxy, Cyano, Fluor oder Chlor darstellt; und n für die Zahl 0 oder 1 steht, enthalten. Der Anteil dieser Verbindungen sollte jedoch relativ niedrig sein, da sonst die optische Anisotropie des Gemisches zu stark erhöht wird.

Die erfindungsgemässen Mischungen können auch eine oder mehrere optisch aktive Verbindungen enthalten. Beispiele geeigneter optisch aktiver Verbindungen sind die Cholesteryl-Derivate (z.B. Cholesterylchlorid oder Cholesterylnonanoat) und die optisch aktiven Verbindungen der Formeln III-XVI mit chiraler Seitenkette [z.B. optisch aktives 4′-(2-Methylbutyl oder 2-Methylbutyloxy)-4-biphenylcarbonitril]. Gewünschtenfalls können auch eine oder mehrere Verbindungen der Formel I und/oder II optisch aktive Verbindungen mit verzweigter, chiraler Seitenkette (z.B. 2-Methylbutyl oder 2-Methylbutyloxy) sein. Die erfindungsgemässen Mischungen können ferner einen oder mehrere dichroitische Farbstoffe (z.B. Azo-, Azoxy- und/oder Anthrachinonfarbstoffe) enthalten. Der Anteil an optisch aktiven Verbindungen und/oder Farbstoffen wird durch die Löslichkeit, die gewünschte Ganghöhe, Farbe, Extinktion und dergleichen bestimmt. Im allgemeinen beträgt der Anteil optisch aktiver Verbindungen und dichroitischer Farbstoffe höchstens je etwa 10 Gew.-% im Gesamtgemisch.

Die Herstellung der erfindungsgemässen Gemische und die Herstellung elektro-optischer Vorrichtungen, welche dieses Gemisch als flüssigkristallines Dielektrikum enthalten, können nach an sich bekannten Methoden erfolgen.

Die Erfindung wird durch die folgenden Synthese- und Mischungsbeispiele weiter veranschaulicht. C bedeutet eine kristalline, S eine smektische, $S_B$ eine smektisch B, N eine nematische und I die isotrope Phase. $V_{10}$ bezeichnet die Spannung für 10% Transmission (Blickrichtung senkrecht zur Plattenoberfläche). $t_{on}$ bezeichnet die Einschaltzeit und $t_{off}$ die Ausschaltzeit bei einer Betriebsspannung entsprechend dem 2.5-fachen Wert von $V_{10}$. $\Delta n$ bezeichnet die optische Anisotropie und $n_o$ den Brechungsindex. $\Delta\epsilon$ bezeichnet die dielektrische Anisotropie ($\Delta\epsilon = \epsilon_{\parallel} - \epsilon_{\perp}$, wobei $\epsilon_{\parallel}$ die Dielektrizitätskonstante parallel zu den Moleküllängsachsen und $\epsilon_{\perp}$ die Dielektrizitätskonstante senkrecht dazu bedeutet. Die elektro-optischen Daten wurden in einer TN-Zelle mit einem Plattenabstand von 6 µm bei 22 °C gemessen, sofern nicht ausdrücklich etwas anderes angegeben wird. Die optischen Daten wurden bei 22 °C gemessen, sofern nicht ausdrücklich etwas anderes angegeben wird.

## Beispiel 1

a) Eine Suspension von 109,6 g 4-(4-Nitrophenyl)cyclohexanon (herstellbar durch Nitrierung von 4-Phenylcyclohexanon) in 1 l Dioxan wurde mit 50 ml Triäthylamin und 2 g 5-prozentiger Palladium-Kohle versetzt und unter gutem Rühren bei Raumtemperatur und 0,3 bar Wasserstoffdruck hydriert. Nach 2 Stunden wurde das Gemisch filtriert. Das Filtrat wurde am Wasserstrahlvakuum bei einer Badtemperatur von 30 °C eingedampft und der Eindampfrückstand über Nacht im Trockenschrank am Wasserstrahlvakuum bei 40 °C getrocknet. Hierbei wurden 94,5 g 4-(4-Aminophenyl)cyclohexanon als weisse Kristalle mit Smp. 127-128 °C erhalten.

b) In einem Sulfierkolben wurden 200 ml 4N Schwefelsäure auf 80 °C erwärmt und dann mit ca. 5% einer Lösung von 37,9 g 4-(4-Aminophenyl)cyclohexanon in 200 ml 4N Schwefelsäure versetzt. Anschliessend wurden bei 80 °C innert 1,5 Stunden gleichzeitig die restliche Lösung von 4-(4-Aminophenyl)-cyclohexanon sowie eine Lösung von 15,2 g Natriumnitrit in 45 ml Wasser zum Reaktionsgemisch zugetropft. Danach wurde das Gemisch bei 80 °C innert 30 Minuten tropfenweise mit einer Lösung von 9 g

Natriumnitrit in 27 ml Wasser versetzt und noch 1 Stunde bei 80 °C weitergerührt. Nach dem Abkühlen des Reaktionsgemisches auf 0 °C wurden die ausgefallenen Kristalle abgenutscht, mit 200 ml kaltem Wasser gewaschen und im Trockenschrank am Wasserstrahlvakuum bei 60 °C bis zur Gewichtskonstanz getrocknet. Das kristalline Rohprodukt (34,6 g) wurde in 520 ml Aethylacetat suspendiert. Die Suspension wurde 1 Stunde zum Rückfluss erhitzt, dann mit 1,7 g Aktivkohle versetzt und dann noch 1 Stunde zum Rückfluss erhitzt. Anschliessend wurde das Gemisch genutscht (Nachwaschen mit 40 ml warmem Aethylacetat) und das Filtrat am Wasserstrahlvakuum bei einer Badtemperatur von 40 °C eingedampft. Trocknung des Eindampfrückstandes im Trockenschrank am Wasserstrahlvakuum bei 60 °C bis zur Gewichtskonstanz ergab 32,2 g 4-(4-Hydroxyphenyl)cyclohexanon als gelb-braune Kristalle mit Smp. 165-166 °C.

c) In einem Sulfierkolben wurde unter schwachem Stickstoffstrom eine Suspension von 3,8 g 4-(4-Hydroxyphenyl)cyclohexanon in 60 ml tert.Butylmethyläther mit 10,6 g 2-(1,3-Dioxolan-2-yl)äthyl-triphenylphosphoniumbromid und 2,2 g Kalium-tert.butylat versetzt. Das Gemisch wurde zunächst 30 Minuten gerührt, dann innert 2,25 Stunden bei 25 °C portionenweise mit weiteren 2,7 g Kalium-tert.butylat versetzt und noch 1 Stunde bei Raumtemperatur gerührt. Danach wurde das Reaktionsgemisch mit weiteren 1,8 g 2-(1,3-Dioxolan-2-yl)äthyl-triphenylphosphoniumbromid und 0,45 g Kalium-tert.butylat versetzt und noch 1 Stunde gerührt. Anschliessend wurde das Reaktionsgemisch auf 80 ml Wasser gegossen und mit 11 ml 2N Schwefelsäure angesäuert. Die wässrige Phase wurde abgetrennt und zweimal mit je 80 ml tert.Butylmethyläther extrahiert. Die organischen Phasen wurden zweimal mit je 50 ml Wasser gewaschen, über Natriumsulfat getrocknet und genutscht. Das Filtrat wurde am Wasserstrahlvakuum bei einer Badtemperatur von 40 °C bis zur Gewichtskonstanz eingedampft. Das erhaltene rötliche Oel (10,9 g) wurde an Kieselgel mit Toluol und Toluol/tert.-Butylmethyläther (Vol. 20:1) chromatographisch getrennt. Eindampfen der Produktfraktionen am Wasserstrahlvakuum und Trocknung des Rückstandes im Trockenschrank am Wasserstrahlvakuum bei 60 °C bis zur Gewichtskonstanz ergab schliesslich 4,5 g 4-[4-[2-(1,3-Dioxolan-2-yl)-äthyliden]cyclohexyl]phenol als gelbliche Kristalle mit Smp. 125,5-126,5 °C.

d) Eine Lösung von 36,5 g 4-[4-[2-(1,3-Dioxolan-2-yl)äthyliden]cyclohexyl]phenol in 500 ml Toluol und 50 ml Triäthylamin wurde in einem Hydrierautoklaven mit 3,2 g 5-prozentiger Platin-Kohle und 10 bar Wasserstoff bei 90 °C 1 Stunde hydriert. Anschliessend wurde das Gemisch genutscht und der Rückstand mit 30 ml warmem Toluol gewaschen. Das Filtrat wurde am Wasserstrahlvakuum bei einer Badtemperatur von 40 °C bis zur Gewichtskonstanz eingedampft. Die erhaltenen weissen Kristalle (37 g) wurden in 180 ml Methanol heiss gelöst. Die Lösung wurde auf Raumtemperatur abkühlen gelassen und dann 5 Stunden in den Kühlschrank gestellt. Anschliessend wurden die Kristalle abgenutscht, mit 50 ml kaltem Methanol gewaschen und im Trockenschrank am Wasserstrahlvakuum bei 60 °C getrocknet. Hierbei wurden 27,6 g 4-[trans-4-[2-(1,3-Dioxolan-2-yl)äthyl]cyclohexyl]phenol als weisse Kristalle mit Smp. 153,5-154,5 °C erhalten.

e) In einem Stahl-Rührautoklaven wurde ein Gemisch von 100 g 4-[trans-4-[2-(1,3-Dioxolan-2-yl)-äthyl]cyclohexyl]- phenol, 10 g 5-prozentigem Rhodium/Aluminiumoxid und 1 l Aethylacetat mit 50 bar Wasserstoff bei 80 °C 90 Minuten hydriert. Dann wurde der Katalysator abgenutscht und mit 100 ml Aethylacetat gewaschen. Das Filtrat wurde eingedampft und der Rückstand bei 25 °C/0,4 mbar getrocknet. Hierbei wurden 101,75 g 4-[trans-4-[2-(1,3-Dioxolan-2-yl)äthyl]cyclohexyl]cyclohexanol enthaltend 59% cis-Isomer und 36% trans-Isomer erhalten.

f) Eine Lösung von 12,9 g Pyridiniumchlorochromat in 80 ml Methylenchlorid wurde bei Raumtemperatur unter Stickstoffbegasung innert 5 Minuten tropfenweise mit einer Lösung von 13,0 g 4-[trans-4-[2-(1,3-Dioxolan-2-yl)äthyl]cyclohexyl]cyclohexanol in 40 ml Methylenchlorid versetzt. Das Gemisch wurde noch 1 Stunde gerührt, dann mit 100 ml Diäthyläther verdünnt und filtriert und das Filtrat eingedampft. Der Eindampfrückstand wurde in 200 ml Diäthyläther aufgenommen, das Gemisch filtriert, das Filtrat eingedampft und dann dieses Vorgehen noch zweimal wiederholt. Danach wurde die erhaltene, bräunliche feste Masse (12,1 g) an Kieselgel mit Aethylacetat/Petroläther (Vol. 1:4) chromatographisch getrennt. Kristallisation der farblosen Ketonfraktion aus 60 ml Aethylacetat und 200 ml Petroläther ergab schliesslich 7,0 g reines 4-[trans-4 -[2-(1,3-Dioxolan-2-yl)äthyl]cyclohexyl]cyclohexanon.

g) Eine Suspension von 2,97 g Natriumborhydrid in 300 ml Isopropanol wurde unter Stickstoffbegasung bei -70 °C tropfenweise mit einer Lösung von 11 g 4-[trans-4-[2-(1,3-Dioxolan-2-yl)äthyl]cyclohexyl]-cyclohexanon in 200 ml Isopropanol versetzt. Nach ca. 1 Stunde wurde das Reaktionsgemisch auf Raumtemperatur erwärmen gelassen, mit 500 ml 0,1N Salzsäure verdünnt und dreimal mit je 300 ml Methylenchlorid extrahiert. Die organischen Phasen wurden mit Wasser gewaschen, über Magnesiumsulfat getrocknet, filtriert und eingedampft. Kristallisation des Rückstandes (11 g) aus 500 ml Aethylacetat/Petroläther (Vol. 3:5) ergab 6,6 g reines trans-4-[trans-4 -[2-(1,3-Dioxolan-2-yl)äthyl]cyclohexyl]-cyclohexanol mit Smp. 129,5 °C.

h) In einem Rundkolben wurden unter Stickstoffbegasung 2,04 g Natriumhydrid als ca. 50-prozentige ölige Suspension vorgelegt und zweimal mit Pentan gewaschen. Dann wurden zum Natriumhydrid 40 ml trockenes Tetrahydrofuran und eine Lösung von 6,0 g trans-4-[trans-4 -[2-(1,3-Dioxolan-2-yl)äthyl]-cyclohexyl]cyclohexanol in 30 ml Tetrahydrofuran zugefügt. Das Gemisch wurde bei Raumtemperatur 30 Minuten gerührt, dann mit 4,0 ml Methyljodid versetzt und 2 Stunden zum Rückfluss erhitzt. Anschliessend wurde das Reaktionsgemisch abgekühlt, in 200 ml Diäthyläther aufgenommen und dreimal mit je 200 ml Wasser gewaschen. Die organische Phase wurde über Magnesiumsulfat getrocknet, filtriert und eingedampft, wobei 6,3 g 2-[2-[trans-4-(trans -4-Methoxycyclohexyl)cyclohexyl]äthyl]-1,3-dioxolan mit Smp. 74° C erhalten wurden.

i) 6,2 g 2-[2-[trans-4-(trans-4-Methoxycyclohexyl)cyclohexyl]äthyl] -1,3-dioxolan wurden unter Stickstoffbegasung mit 100 ml Wasser, 50 ml Eisessig und 20 ml Dioxan versetzt. Das Gemisch wurde 1,5 Stunden bei 100° C (Badtemperatur) gerührt, dann mit verdünnter Natriumhydrogencarbonat-Lösung neutralisiert und dreimal mit Diäthyläther extrahiert. Die vereinigten Aetherphasen wurden einmal mit Wasser und zweimal mit verdünnter Natriumhydrogencarbonat-Lösung gewaschen, über Magnesiumsulfat getrocknet, filtriert und eingedampft. Umkristallisation des erhaltenen rohen Aldehyds (4,34 g) aus 150 ml Petroläther bei -20° C ergab 2,8 g 3-[trans-4-(trans -4-Methoxycyclohexyl)cyclohexyl]propionaldehyd in einer Reinheit von 96%.

j) 2,65 g Aethyltriphenylphosphoniumbromid wurden unter Argonbegasung in 40 ml tert.Butylmethyläther aufgeschlämmt. Die Suspension wurde bei Raumtemperatur mit 797 mg Kalium-tert.butylat versetzt und 1 Stunde gerührt. Anschliessend wurde das Gemisch auf 0° C gekühlt, innert 3 Minuten tropfenweise mit einer Lösung von 1,1 g 3-[trans-4-(trans -4-Methoxycyclohexyl)cyclohexyl]-propionaldehyd in 15 ml tert.Butylmethyläther versetzt und dann unter Rühren langsam auf Raumtemperatur erwärmen gelassen. Nach 2 Stunden wurde die hellgelbe Suspension in Diäthyläther/Wasser verteilt. Die wässrige Phase wurde abgetrennt und dreimal mit Diäthyläther gewaschen. Die organischen Phasen wurden zweimal mit Wasser gewaschen, über Magnesiumsulfat getrocknet, filtriert und eingedampft. Chromatographische Reinigung des gelben, festen Rohproduktes an Kieselgel mit Aethylacetat/Petroläther (Vol. 3:97) ergab 0,91 g trans-4-(3-Pentenyl)-1-(trans-4-methoxycyclohexyl)cyclohexan mit einem Z/E-Verhältnis von 86:11.

k) 0,91 g trans-4-(3-Pentenyl)-1-(trans-4-methoxycyclohexyl)cyclohexan (Z/E = 86:11) wurden unter Stickstoffbegasung mit 6 ml Toluol, 0,11 g Natriumbenzolsulfinat und 1 ml 1N Salzsäure versetzt. Das Gemisch wurde 15 Stunden bei 50° C gerührt, dann auf 100 ml verdünnte Natriumhydrogencarbonat-Lösung gegossen und dreimal mit je 50 ml Diäthyläther extrahiert. Die vereinigten organischen Phasen wurden mit 100 ml verdünnter Natriumcarbonat-Lösung und mit 100 ml Wasser gewaschen, über Magnesiumsulfat getrocknet, filtriert und eingedampft. Das erhaltene gelbliche Oel (0,9 g) wurde an mit Silbernitrat imprägniertem Kieselgel mit Diäthyläther/Hexan (Vol. 1:9) chromatographisch gereinigt. Umkristallisation des erhaltenen Produktes (486 mg) aus 10 ml Methanol bei -20° C ergab reines trans-4-(3E-Pentenyl)-1-(trans-4-methoxycyclohexyl)cyclohexan mit Smp. (C-N) 16,6° C und Klp. (N-I) 43,7° C.

In analoger Weise können folgende Verbindungen hergestellt werden:
trans-4-(3-Butenyl)-1-(trans-4-methoxycyclohexyl)cyclohexan, Smp. (C-N) -13,6° C, Klp. (N-I) 18,0° C;
trans-4-(3-Butenyl)-1-(trans-4-äthoxycyclohexyl)cyclohexan, Smp. (C-N) 13,1° C, Klp. (N-I) 45,3° C;
trans-4-(3-Butenyl)-1-(trans-4-propyloxycyclohexyl)cyclohexan;
trans-4-(3-Butenyl)-1-(trans-4-butyloxycyclohexyl)cyclohexan;
trans-4-(3-Butenyl)-1-(trans-4-pentyloxycyclohexyl)cyclohexan;
trans-4-(3-Butenyl)-1-(trans-4-hexyloxycyclohexyl)cyclohexan;
trans-4-(3-Butenyl)-1-(trans-4-allyloxycyclohexyl)cyclohexan;
trans-4-(3-Butenyl)-1-[trans-4-(2E-butenyloxy)cyclohexyl]cyclohexan,
trans-4-(3-Butenyl)-1-[trans-4-(2E-pentenyloxy)cyclohexyl]cyclohexan,
trans-4-(3-Butenyl)-1-[trans-4-(2E-hexenyloxy)cyclohexyl]cyclohexan,
trans-4-(3-Butenyl)-1-[trans-4-(3-butenyloxy)cyclohexyl]cyclohexan,
trans-4-(3-Butenyl)-1-[trans-4-(3Z-pentenyloxy)cyclohexyl]cyclohexan,
trans-4-(3-Butenyl)-1-[trans-4-(3Z-hexenyloxy)cyclohexyl]cyclohexan,
trans-4-(3E-Pentenyl)-1-(trans-4-äthoxycyclohexyl)cyclohexan, Smp. (C-N) 44,5° C, Klp. (N-I) 76,5° C;
trans-4-(3E-Pentenyl)-1-(trans-4-propyloxycyclohexyl)cyclohexan;
trans-4-(3E-Pentenyl)-1-(trans-4-butyloxycyclohexyl)cyclohexan;
trans-4-(3E-Pentenyl)-1-(trans-4-pentyloxycyclohexyl)cyclohexan;
trans-4-(3E-Pentenyl)-1-(trans-4-hexyloxycyclohexyl)cyclohexan;
trans-4-(3E-Pentenyl)-1-(trans-4-allyloxycyclohexyl)cyclohexan;

trans-4-(3E-Pentenyl)-1-[trans-4-(2E-butenyloxy)cyclohexyl]cyclohexan;
trans-4-(3E-Pentenyl)-1-[trans-4-(2E-pentenyloxy)cyclohexyl]cyclohexan;
trans-4-(3E-Pentenyl)-1-[trans-4-(2E-hexenyloxy)cyclohexyl]cyclohexan;
trans-4-(3E-Pentenyl)-1-[trans-4-(3-butenyloxy)cyclohexyl]cyclohexan;
trans-4-(3E-Pentenyl)-1-[trans-4-(3Z-pentenyloxy)cyclohexyl]cyclohexan;
trans-4-(3E-Pentenyl)-1-[trans-4-(3Z-hexenyloxy)cyclohexyl]cyclohexan;
trans-4-3E-Hexenyl )-1-(trans-4-methoxycyclohexyl)cyclohexan;
trans-4-(3E-Hexenyl)-1-(trans-4-äthoxycyclohexyl)cyclohexan;
trans-4-(3E-Hexenyl)-1-(trans-4-propyloxycyclohexyl)cyclohexan;
trans-4-(3E-Hexenyl)-1-(trans-4-butyloxycyclohexyl)cyclohexan;
trans-4-3E-Hexenyl )-1-(trans-4-pentyloxycyclohexyl) cyclohexan;
trans-4-(3E-Hexenyl)-1-(trans-4-hexyloxycyclohexyl)cyclohexan;
trans-4-(3E-Hexenyl)-1-(trans-4-allyloxycyclohexyl)cyclohexan;
trans-4-(3E-Hexenyl)-1-[trans-4-(2E-butenyloxy)cyclohexyl]cylohexan;
trans-4-(3E-Hexenyl)-1-[trans-4-(2E-pentenyloxy)cyclohexyl]cylohexan;
trans-4-(3E-Hexenyl)-1-[trans-4-(2E-hexenyloxy)cyclohexyl]cylohexan;
trans-4-(3E-Hexenyl)-1-[trans-4-(3-butenyloxy)cyclohexyl]cylohexan;
trans-4-(3E-Hexenyl)-1-[trans-4-(3Z-pentenyloxy)cyclohexyl]cylohexan;
trans-4-(3E-Hexenyl)-1-[trans-4-(3Z-hexenyloxy)cyclohexyl]cylohexan.

In analoger Weise zu den Stufen a) bis i) und weitere Umsetzung des erhaltenen Propionaldehyds in analoger Weise zu Beispiel 2, Stufen h), i) und j) können folgende Verbindungen hergestellt werden:
trans-4-(4-Pentenyl)-1-(trans-4-methoxycyclohexyl)cyclohexan, Smp. (C-$S_B$) 7,7° C, Klp. ($S_B$-I) 14,0° C;
trans-4-(4-Pentenyl)-1-(trans-4-äthoxycyclohexyl)cyclohexan, Smp. (C-$S_B$) 10,5° C, Klp. ($S_B$-I) 43,1° C;
trans-4-(4-Pentenyl)-1-(trans-4-propyloxycyclohexyl)cyclohexan;
trans-4-(4-Pentenyl)-1-(trans-4-butyloxycyclohexyl)cyclohexan;
trans-4-(4-Pentenyl)-1-(trans-4-pentyloxycyclohexyl)cyclohexan;
trans-4-(4-Pentenyl)-1-(trans-4-hexyloxycyclohexyl)cyclohexan;
trans-4-(4-Pentenyl)-1-(trans-4-allyloxycyclohexyl)cyclohexan;
trans-4-(4-Pentenyl)-1-[trans-4-(3-butenyloxy)cyclohexyl]cyclohexan;
trans-4-(4Z-Hexenyl)-1-(trans-4-methoxycyclohexyl)cyclohexan;
trans-4-(4Z-Hexenyl)-1-(trans-4-äthoxycyclohexyl)cyclohexan;
trans-4-(4Z-Hexenyl)-1-(trans-4-propyloxycyclohexyl)cyclohexan;
trans-4-(4Z-Hexenyl)-1-(trans-4-butyloxycyclohexyl)cyclohexan;
trans-4-(4Z-Hexenyl)-1-(trans-4-pentyloxycyclohexyl) cyclohexan;
trans-4-(4Z-Hexenyl)-1-(trans-4-hexyloxycyclohexyl)cyclohexan;
trans-4-(4Z-Hexenyl)-1-(trans-4-allyloxycyclohexyl)cyclohexan;
trans-4-(4Z-Hexenyl)-1-[trans-4-(3-butenyloxy)cyclohexyl]cyclohexan.

Durch Umsetzung des 4-(4-Hydroxyphenyl)cyclohexanons (Stufe b) in analoger Weise zu Beispiel 2, Stufen h) und i) Acetalisierung des erhaltenen 4-(trans-4-Formylcyclohexyl)phenols mit Aethylenglykol in Gegenwart von p-Toluolsulfonsäure und weitere Umsetzung des Dioxolans in analoger Weise zu den vorliegenden Stufen e) bis k) können folgende Verbindungen hergestellt werden:
trans-4-Vinyl-1-(trans-4-methoxycyclohexyl)cyclohexan, Smp. (C-I) -20,3° C, Klp. (N-I) -26.5° C;
trans-4-Vinyl-1-(trans-4-äthoxycyclohexyl)cyclohexan, Smp. (C-N) -17° C, Klp. (N-I) 6,3° C;
trans-4-Vinyl-1-(trans-4-propyloxycyclohexyl)cyclohexan;
trans-4-Vinyl-1-(trans-4-butyloxycyclohexyl)cyclohexan;
trans-4-Vinyl-1-(trans-4-pentyloxycyclohexyl)cyclohexan;
trans-4-Vinyl-1-(trans-4-hexyloxycyclohexyl)cyclohexan;
trans-4-Vinyl-1-(trans-4-allyloxycyclohexyl)cyclohexan;
trans-4-Vinyl-1-[trans-4-(3-butenyloxy)cyclohexyl]cyclohexan;
trans-4-(1E-Propenyl)-1-(trans-4-methoxycyclohexyl)cyclohexan, Smp. (C-N) 4,2° C, Klp. (N-I) 17,2° C;
trans-4-(1E-Propenyl)-1-(trans-4-äthoxycyclohexyl)cyclohexan, Smp. (C-$S_B$) 37° C, Phasenübergang ($S_B$-N) 37,5° C, Klp. (N-I) 67,5° C
; trans-4-(1E-Propenyl)-1-(trans-4-propyloxycyclohexyl)cyclohexan;
trans-4-(1E-Propenyl-1-(trans-4-butyloxycyclohexyl)cyclohexan;
trans-4-(1E-Propenyl )-1-(trans-4-pentyloxycyclohexyl)cyclohexan;
trans-4-(1E-Propenyl )-1-(trans-4-hexyloxycyclohexyl)cyclohexan;
trans-4-(1E-Propenyl)-1-(trans-4-allyloxycyclohexyl)cyclohexan;
trans-4-(1E-Propenyl)-1-[trans-4-(3-butenyloxy)cyclohexyl]cyclohexan;

trans-4-(1E-Butenyl)-1-(trans-4-methoxycyclohexyl)cyclohexan, Smp. (C-$S_B$) -2,9 °C, Phasenübergang ($S_B$-N) 3,4 °C, Klp. (N-I) 8,4 °C;
trans-4-(1E-Butenyl)-1-(trans-4-äthoxycyclohexyl)cyclohexan, Smp. (C-$S_B$) 8,3 °C, Phasenübergang ($S_B$-N) 21,5 °C, Klp. (N-I) 49,7 °C;
trans-4-(1E-Butenyl)-1-(trans-4-propyloxycyclohexyl)cyclohexan;
trans-4-(1E-Butenyl)-1-(trans-4-butyloxycyclohexyl)cyclohexan;
trans-4-(1E-Butenyl)-1-(trans-4-pentyloxycyclohexyl)cyclohexan;
trans-4-(1E-Butenyl)-1-(trans-4-allyloxycyclohexyl)cyclohexan;
trans-4-(1E-Butenyl)-1-[trans-4-(3-butenyloxy)cyclohexyl]cyclohexan;
trans-4-(1E-Pentenyl )-1-(trans-4-methoxycyclohexyl)cyclohexan, Smp. (C-$S_B$) -17,4 °C, Phasenübergang ($S_B$-N) 21,5 °C, Klp. (N-I) 24,7 °C;
trans-4-(1E-Pentenyl )-1-(trans-4-äthoxycyclohexyl)cyclohexan, Smp. (C-$S_B$) 14 °C, Phasenübergang ($S_B$-N) 48,1 °C, Klp. (N-I) 62,5 °C;
trans-4-(1E-Pentenyl )-1-( trans-4-propyloxycyclohexyl)cyclohexan;
trans-4-(1E-Pentenyl) -1-(trans-4-butyloxycyclohexyl)cyclohexan;
trans-4-(1E-Pentenyl )-1-(trans-4-allyloxycyclohexyl)cyclohexan;
trans-4(1E-Pentenyl)-1-[trans-4-(3-butenyloxy)cyclohexyl]cyclohexan.

Ausgehend von 4-(2-Phenyläthyl)cyclohexanon [herstellbar in analoger Weise zum in Mol. Cryst. Liq. Cryst. 131, 327 (1985) beschriebenen Nitril] können nach der obigen Methode auch die folgenden Verbindungen hergestellt werden:

4-[2-[trans-4-(2-(1,3-Dioxolan-2-yl)äthyl)cyclohexyl]äthyl]cyclohexanon;
trans-4-(3-Butenyl)-1-[2-(trans-4-methoxycyclohexyl)äthyl]cyclohexan;
trans-4-(3-Butenyl)-1-[2-(trans-4-äthoxycyclohexyl)äthyl]cyclohexan;
trans-4-(3-Butenyl)-1-[2-(trans-4-propyloxycyclohexyl)äthyl]cyclohexan;
trans-4-(3-Butenyl)-1-[2-(trans-4-butyloxycyclohexyl)äthyl]cyclohexan;
trans-4-(3-Butenyl)-1-[2-(trans-4-pentyloxycyclohexyl)äthyl]cyclohexan;
trans-4-(3-Butenyl)-1-[2-(trans-4-hexyloxycyclohexyl)äthyl]cyclohexan;
trans-4-(3-Butenyl)-1-[2-(trans-4-allyloxycyclohexyl)äthyl]cyclohexan;
trans-4-(3-Butenyl)-1-[2-(trans-4-(2E-butenyloxy)cyclohexyl)äthyl]cyclohexan;
trans-4-(3-Butenyl)-1-[2-(trans-4-(2E-pentenyloxy)cyclohexyl)äthyl]cyclohexan;
trans-4-(3-Butenyl)-1-[2-(trans-4-(2E-hexenyloxy)cyclohexyl)äthyl]cyclohexan;
trans-4-(3-Butenyl)-1-[2-(trans-4-(3-butenyloxy)cyclohexyl)äthyl]cyclohexan;
trans-4-(3-Butenyl)-1-[2-(trans-4-(3Z-pentenyloxy)cyclohexyl)äthyl]cyclohexan;
trans-4-(3-Butenyl)-1-[2-(trans-4-(3Z-hexenyloxy)cyclohexyl)äthyl]cyclohexan;
trans-4-(3E-Pentenyl)-1-[2-(trans-4-methoxycyclohexyl)äthyl]cyclohexan;
trans-4-(3E-Pentenyl)-1-[2-(trans-4-äthoxycyclohexyl)äthyl]cyclohexan;
trans-4-(3E-Pentenyl)-1-[2-(trans-4-propyloxycyclohexyl)äthyl]cyclohexan;
trans-4-(3E-Pentenyl)-1-[2-(trans-4-butyloxycyclohexyl)äthyl]cyclohexan;
trans-4-(3E-Pentenyl)-1-[2-(trans-4-pentyloxycyclohexyl)äthyl]cyclohexan;
trans-4-(3E-Pentenyl)-1-[2-(trans-4-hexyloxycyclohexyl)äthyl]cyclohexan;
trans-4-(3E-Pentenyl)-1-[2-(trans-4-allyloxycyclohexyl)äthyl]cyclohexan;
trans-4-(3E-Pentenyl)-1-[2-(trans-4-(2E-butenyloxy)cyclohexyl)äthyl]cyclohexan;
trans-4-(3E-Pentenyl)-1-[2-(trans-4-(2E-pentenyloxy)cyclohexyl)äthyl]cyclohexan;
trans-4-(3E-Pentenyl)-1-[2-(trans-4-(2E-hexenyloxy)cyclohexyl)äthyl]cyclohexan;
trans-4-(3E-Pentenyl)-1-[2-(trans-4-(3-butenyloxy)cyclohexyl)äthyl]cyclohexan;
trans-4-(3E-Pentenyl)-1-[2-(trans-4-(3Z-pentenyloxy)cyclohexyl)äthyl]cyclohexan;
trans-4-(3E-Pentenyl)-1-[2-(trans-4-(3Z-hexenyloxy)cyclohexyl)äthyl]cyclohexan;
trans-4-(3E-Hexenyl)-1-[2-(trans-4-methoxycyclohexyl)äthyl]cyclohexan;
trans-4-(3E-Hexenyl)-1-[2-(trans-4-äthoxycyclohexyl)äthyl]cyclohexan;
trans-4-(3E-Hexenyl)-1-[2-(trans-4-propyloxycyclohexyl)äthyl]cyclohexan;
trans-4-(3E-Hexenyl )-1-[2-(trans-4-butyloxycyclohexyl) äthyl]cyclohexan;
trans-4-(3E-Hexenyl)-1-[2-(trans-4-pentyloxycyclohexyl)äthyl]cyclohexan;
trans-4-(3E-Hexenyl)-1-[2-(trans-4-hexyloxycyclohexyl)äthyl]cyclohexan;
trans-4-(3E-Hexenyl)-1-[2-(trans-4-allyloxycyclohexyl)äthyl]cyclohexan;
trans-4-(3E-Hexenyl)-1-[2-(trans-4-(3-butenyloxy)cyclohexyl)äthyl]cyclohexan;
trans-4-(4-Pentenyl)-1-[2-(trans-4-methoxycyclohexyl)äthyl]cyclohexan;
trans-4-(4-Pentenyl)-1-[2-(trans-4-äthoxycyclohexyl)äthyl]cyclohexan;
trans-4-(4-Pentenyl)-1-[2-(trans-4-propyloxycyclohexyl)äthyl]cyclohexan;

trans-4-(4-Pentenyl)-1-[2-(trans-4-butyloxycyclohexyl)äthyl]cyclohexan;
trans-4-(4-Pentenyl)-1-[2-(trans-4-pentyloxycyclohexyl)äthyl]cyclohexan;
trans-4-(4-Pentenyl)-1-[2-(trans-4-hexyloxycyclohexyl)äthyl]cyclohexan;
trans-4-(4-Pentenyl)-1-[2-(trans-4-allyloxycyclohexyl)äthyl]cyclohexan;
trans-4-(4-Pentenyl)-1-[2-(trans-4-(3-butenyloxy)cyclohexyl)äthyl]cyclohexan;
trans-4-(4Z-Hexenyl)-1-[2-(trans-4-methoxycyclohexyl)äthyl]cyclohexan;
trans-4-(4Z-Hexenyl)-1-[2-(trans-4-äthoxycyclohexyl)äthyl]cyclohexan;
trans-4-(4Z-Hexenyl)-1-[2-(trans-4-propyloxycyclohexyl)äthyl]cyclohexan;
trans-4-(4Z-Hexenyl)-1-[2-(trans-4-butyloxycyclohexyl)äthyl]cyclohexan;
trans-4-(4Z-Hexenyl)-1-[2-(trans-4-allyloxycyclohexyl)äthyl]cyclohexan;
trans-4-(4Z-Hexenyl)-1-[2-(trans-4-(3-butenyloxy)cyclohexyl)äthyl]cyclohexan;
trans-4-Vinyl-1-[2-(trans-4-methoxycyclohexyl)äthyl]cyclohexan;
trans-4-Vinyl-1-[2-(trans-4-äthoxycyclohexyl)äthyl]cyclohexan;
trans-4-Vinyl-1-[2-(trans-4-propyloxycyclohexyl)äthyl]cyclohexan;
trans-4-Vinyl-1-[2-(trans-4-butyloxycyclohexyl)äthyl]cyclohexan;
trans-4-Vinyl-1-[2-(trans-4-pentyloxycyclohexyl)äthyl]cyclohexan;
trans-4-Vinyl-1-[2-(trans-4-hexyloxycyclohexyl)äthyl]cyclohexan;
trans-4-Vinyl-1-[2-(trans-4-allyloxycyclohexyl)äthyl]cyclohexan;
trans-4-Vinyl-1-[2-(trans-4-(3-butenyloxy)cyclohexyl)äthyl]cyclohexan;
trans-4-(1E-Propenyl)-1-[2-(trans-4-methoxycyclohexyl)äthyl]cyclohexan;
trans-4-(1E-Propenyl)-1-[2-(trans-4-äthoxycyclohexyl)äthyl]cyclohexan;
trans-4-(1E-Propenyl)-1-[2-(trans-4-propyloxycyclohexyl)äthyl]cyclohexan;
trans-4-(1E-Propenyl)-1-[2-(trans-4-butyloxycyclohexyl)äthyl]cyclohexan;
trans-4-(1E-Propenyl)-1-[2-(trans-4-pentyloxycyclohexyl)äthyl]cyclohexan;
trans-4-(1E-Propenyl)-1-[2-(trans-4-hexyloxycyclohexyl)äthyl]cyclohexan;
trans-4-(1E-Propenyl)-1-[2-(trans-4-allyloxycyclohexyl)äthyl]cyclohexan;
trans-4-(1E-Propenyl)-1-[2-(trans-4-(3-butenyloxy)cyclohexyl)äthyl]cyclohexan;
trans-4-(1E-Butenyl)-1-[2-(trans-4-methoxycyclohexyl)äthyl]cyclohexan;
trans-4-(1E-Butenyl)-1-[2-(trans-4-äthoxycyclohexyl)äthyl]cyclohexan;
trans-4-(1E-Butenyl)-1-[2-(trans-4-propyloxycyclohexyl)äthyl]cyclohexan;
trans-4-(1E-Butenyl)-1-[2-(trans-4-butyloxycyclohexyl)äthyl]cyclohexan;
trans-4-(1E-Butenyl)-1-[2-(trans-4-pentyloxycyclohexyl)äthyl]cyclohexan;
trans-4-(1E-Butenyl)-1-[2-(trans-4-allyloxycyclohexyl)äthyl]cyclohexan;
trans-4-(1E-Butenyl)-1-[2-(trans-4-(3-butenyloxy)cyclohexyl)äthyl]cyclohexan;
trans-4-(1E-Pentenyl)-1-[2-(trans-4-methoxycyclohexyl)äthyl]cyclohexan;
trans-4-(1E-Pentenyl)-1-[2-(trans-4-äthoxycyclohexyl)äthyl]cyclohexan;
trans-4-(1E-Pentenyl)-1-[2-(trans-4-propyloxycyclohexyl)äthyl]cyclohexan;
trans-4-(1E-Pentenyl)-1-[2-(trans-4-butyloxycyclohexyl)äthyl]cyclohexan;
trans-4-(1E-Pentenyl)-1-[2-(trans-4-allyloxycyclohexyl)äthyl]cyclohexan;
trans-4-(1E-Pentenyl)-1-[2-(trans-4-(3-butenyloxy)cyclohexyl)äthyl]cyclohexan.

## Beispiel 2

a) 140,9 g 2-(1,3-Dioxolan-2-yl)äthyl-triphenylphosphoniumbromid wurden unter Stickstoffbegasung in 4,5 l Tetrahydrofuran suspendiert und die Suspension bei 0 °C innert 5 Minuten mit 36,8 g Kalium-tert.butylat versetzt. Die orange Suspension wurde noch 1 Stunde bei Raumtemperatur gerührt und innert 5 Minuten mit 46,1 g 4-(4-Oxocyclohexyl)benzamid versetzt. Das Reaktionsgemisch wurde noch 4,5 Stunden bei Raumtemperatur gerührt und dann im Vakuum eingeengt. Die erhaltenen, gelblichen Kristalle (212,5 g) wurden mit 1,2 l Diäthyläther versetzt. Das Gemisch wurde 30 Minuten bei Raumtemperatur gerührt und dann genutscht. Der Rückstand wurde mit Diäthyläther gewaschen und dann in 700 ml Wasser aufgeschlämmt. Das Gemisch wurde 15 Minuten gerührt und dann genutscht. Der Rückstand wurde mit Wasser gewaschen und in 600 ml Dioxan heiss gelöst. Die Lösung wurde auf Raumtemperatur abkühlen gelassen. Die ausgefallenen Kristalle wurden abgenutscht, mit wenig Dioxan und Hexan gewaschen und im Vakuum bei 60 °C getrocknet, wobei 39,2 g kristallines 4-[4-[2-(1,3-Dioxolan-2-yl)äthyliden]cyclohexyl]benzamid mit Smp. 209-212 °C erhalten wurden. Aufarbeitung der Mutterlauge (72,6 g) ergab weitere 7,7 g Produkt und 64,2 g zweite Mutterlauge.

b) Ein Gemisch von 500 mg 4-[4-[2-(1,3-Dioxolan-2-yl)äthyliden]cyclohexyl]benzamid und 20 ml Dioxan/Triäthylamin (Vol. 9:1) wurde mittels 500 mg 10-prozentiger Platin-Kohle 2 Stunden hydriert. Dann wurde das Reaktionsgemisch filtriert und das Filtrat eingedampft. Umkristallisation des Eindampfrückstandes aus 40 ml Dioxan ergab 230 mg 4-[trans-4-[2-(1,3-Dioxolan-2-yl)äthyl]cyclohexyl]benzamid als farblose Kristalle.

c) 27 g 4-[trans-4-[2-(1,3-Dioxolan-2-yl)äthyl]cyclohexyl]benzamid wurden mit 5 g 5-prozentiger Ruthenium-Kohle in Dioxan bei 120°C und 40 bar Wasserstoff 8 Stunden hydriert. Das nach Filtration und Waschen mit Tetrahydrofuran erhaltene Rohprodukt (25 g) enthielt 69% cis-Isomer und 25% trans-Isomer von 4-[trans-4-[2-(1,3-Dioxolan -2-yl)äthyl]cyclohexyl]cyclohexancarboxamid.

d) 42 g rohes 4-[trans-4-[2-(1,3-Dioxolan -2-yl)äthyl]cyclohexyl]cyclohexancarboxamid wurden unter Argonbegasung in 500 ml Aethylenglykol aufgeschlämmt und dann mit 19 g festem Kaliumhydroxid versetzt. Das Gemisch wurde unter Rühren 5 Stunden auf 180°C (Badtemperatur) erhitzt. Nach dem Abkühlen wurde das Reaktionsgemisch auf 500 ml Wasser gegossen, mit 10-prozentiger Salzsäure auf pH ca. 3 angesäuert und dreimal mit je 300 ml Methylenchlorid extrahiert. Die vereinigten organischen Phasen wurden einmal mit 500 ml 1-prozentiger Salzsäure und zweimal mit je 500 ml Wasser gewaschen, über Magnesiumsulfat getrocknet, filtriert und eingedampft. Das dunkelbraune Rohprodukt (41 g) wurde an Kieselgel mit Aethylacetat chromatographisch gereinigt. Kristallisation des erhaltenen Produktes (36 g) aus Aceton ergab 13,8 g reine trans-4-[trans-4-[2-(1,3-Dioxolan-2-yl)äthyl]cyclohexyl]cyclohexancarbonsäure. Aufarbeitung der Mutterlauge ergab weitere 2,5 g reines Produkt.

e) 18 g trans-4-[trans-4-[2-(1,3-Dioxolan-2-yl)äthyl]cyclohexyl]cyclohexancarbonsäure wurden unter Argonbegasung in 600 ml Chloroform gelöst und die Lösung bei 0°C unter Rühren innert 3 Minuten tropfenweise mit einer Lösung von 7,2 ml Chlorameisensäureäthylester in 40 ml Chloroform versetzt. Die Reaktionslösung wurde noch 30 Minuten gerührt. Dann wurde während 10 Minuten Ammoniak-Gas in die Lösung eingeleitet. Das Gemisch wurde noch 30 Minuten bei 0°C gerührt und dann zweimal mit je 300 ml Wasser extrahiert. Die wässrigen Phasen wurden mit je 100 ml Chloroform nachextrahiert. Die vereinigten organischen Phasen wurden über Magnesiumsulfat getrocknet, filtriert und eingedampft. Umkristallisation des erhaltenen, braunen kristallinen Rohproduktes (19 g) aus 800 ml Methylenchlorid ergab 13 g trans-4-[trans-4-[2-(1,3-Dioxolan -2-yl)äthyl]cyclohexyl]cyclohexancarboxamid als hellbraune Kristalle.

f) 2,1 g trans-4-[trans-4-[2-(1,3-Dioxolan -2-yl)äthyl]-cyclohexyl]cyclohexancarboxamid wurden unter Argonbegasung in 60 ml Dimethylformamid aufgeschlämmt. Die Suspension wurde mit 1,32 ml Pyridin und 0.898 ml Methansulfochlorid versetzt und 1,5 Stunden bei 60°C (Badtemperatur) gerührt. Anschliessend wurde die Reaktionslösung in Methylenchlorid und 10-prozentiger Salzsäure verteilt. Die wässrige Phase wurde zweimal mit je 100 ml Methylenchlorid extrahiert. Die organischen Phasen wurden zweimal mit je 100 ml Wasser gewaschen, über Magnesiumsulfat getrocknet, filtriert und eingeengt. Hierbei wurden 2,5 g trans-4-[trans-4-[2-(1,3-Dioxolan -2-yl)äthyl]cyclohexyl]cyclohexancarbonitril als gelbe Kristalle in einer Reinheit von 96% erhalten.

g) 3,0 g rohes trans-4-[trans-4-[2-(1,3-Dioxolan-2-yl)äthyl]cyclohexyl]cyclohexancarbonitril wurden unter Argonbegasung in 50 ml Wasser, 25 ml Eisessig und 10 ml Dioxan aufgeschlämmt und 1 Stunde bei 100°C gerührt. Danach wurde die Reaktionslösung mit 100 ml Wasser versetzt. Die wassrige Phase wurde abgetrennt und dreimal mit je 100 ml Diäthyläther extrahiert. Die organischen Phasen wurden mit 100 ml verdünnter Natriumhydrogencarbonat-Lösung und mit 100 ml Wasser gewaschen, über Magnesiumsulfat getrocknet, filtriert und eingeengt. Umkristallisation der erhaltenen gelben Kristalle (2,25 g) aus 60 ml Hexan ergab 1,98 g 3-[trans-4-(trans-4-Cyanocyclohexyl)cyclohexyl]propionaldehyd als farblose Kristalle.

h) 4,11 g Methoxymethyl-triphenylphosphoniumchlorid wurden unter Argonbegasung in 60 ml tert.Butylmethyläther aufgeschlämmt und bei Raumtemperatur innert 2 Minuten mit 1,26 g Kalium-tert.butylat versetzt. Die Suspension wurde noch 1 Stunde bei Raumtemperatur gerührt, dann auf 0°C gekühlt und innert 5 Minuten tropfenweise mit einer Lösung von 1,98 g 3-[trans-4-(trans-4-Cyanocyclohexyl)cyclohexyl]propionaldehyd in 25 ml tert.Butylmethyläther versetzt. Das Reaktionsgemisch wurde noch 45 Minuten bei 0°C gerührt, dann mit 100 ml Wasser verdünnt und dreimal mit je 100 ml Diäthyläther extrahiert. Die organischen Phasen wurden zweimal mit je 100 ml Wasser gewaschen, über Magnesiumsulfat getrocknet, filtriert und eingeengt. Chromatographische Reinigung des Rohprodukts (5,1 g) an Kieselgel bei 0,5 bar mit Aethylacetat/Petroläther (Vol. 5:95) ergab 2,0 g trans-4-[trans-4-(4-Methoxy-3-butenyl)-cyclohexyl]cyclohexancarbonitril als farbloses milchiges Oel.

i) 1,65 g trans-4-[trans-4-(4-Methoxy -3-butenyl)cyclohexyl]cyclohexancarbonitril wurden unter Argonbegasung in 50 ml Wasser, 25 ml Eisessig und 12 ml Dioxan aufgeschlämmt. Die Suspension wurde 2 Stunden bei 80°C (Badtemperatur) gerührt und dann mit 50 ml Wasser verdünnt. Die wässrige Phase wurde abgetrennt und dreimal mit je 100 ml Diäthyläther extrahiert. Die organischen Phasen wurden zweimal mit je 100 ml Wasser, dann mit 100 ml gesättigter Natriumhydrogencarbonat-Lösung und

nochmals mit 100 ml Wasser gewaschen, dann über Magnesiumsulfat getrocknet, filtriert und eingeengt. Hierbei wurden 1,5 g 4-[ trans-4-(trans-4-Cyanocyclohexyl)cyclohexyl]butyraldehyd als farblose Kristalle erhalten.

j) 3,28 g Methyltriphenylphosphoniumbromid wurden unter Argonbegasung in 40 ml tert.Butylmethyläther aufgeschlämmt. Die Suspension wurde bei Raumtemperatur innert 1 Minute mit 962 mg Kalium-tert.butylat versetzt und 1 Stunde gerührt. Anschliessend wurde das Gemisch auf 0 °C gekühlt, innert 3 Minuten tropfenweise mit einer Lösung von 1,5 g 4-[trans-4-(trans-4-Cyanocyclohexyl)cyclohexyl]-butyraldehyd in 20 ml tert.Butylmethyläther versetzt und noch 45 Minuten bei 0 °C gerührt. Danach wurde das Reaktionsgemisch mit 80 ml Wasser verdünnt und dreimal mit je 100 ml Petroläther extrahiert. Die organichen Phasen wurden zweimal mit je 100 ml Wasser gewaschen, über Magnesiumsulfat getrocknet, filtriert und eingeengt. Chromtographische Reinigung des Rohproduktes (2,1 g) an Kieselgel bei 0,5 bar mit Aethylacetat/Petroläther (Vol. 2:98) und Umkristallisation aus 20 ml Methanol ergab 1,26 g trans-4-[trans-4-(4-Pentenyl)cyclohexyl]cyclohexancarbonitril als farblose Kristalle mit Smp. (C-$S_B$) 20,1 °C, $S_B$-N 36,9 °C, Klp. (N-I) 54,8 °C.

In analoger Weise können folgende Verbindungen hergestellt werden:
trans-4-[trans-4-(4Z-Hexenyl)cyclohexyl]cyclohexancarbonitril;
trans-4-[trans-4-(4Z-Heptenyl)cyclohexyl]cyclohexancarbonitril:
trans-4-[trans-4-(4Z-Octenyl) cyclohexyl]cyclohexancarbonitril;
trans-4-[trans-4-(4Z-Nonenyl)cyclohexyl]cyclohexancarbonitril;
trans-4-[trans-4-(4Z-Decenyl)cyclohexyl]cyclohexancarbonitril.

Durch Umsetzung des in Stufe g) erhaltenen 3-[trans-4-(trans-4-Cyanocyclohexyl)cyclohexyl]-propionaldehyds in analoger Weise zu Stufe j) und gegebenenfalls E/Z-Isomerisierung in analoger Weise zu Beispiel 1k) können folgende Verbindungen hergestellt werden:
trans-4-[trans-4-(3-Butenyl)cyclohexyl]cyclohexancarbonitril; Smp. (C-N) 50,7 °C, Klp. (N-I) 82,7 °C;
trans-4-[trans-4-(3E-Pentenyl)cyclohexyl]cyclohexancarbonitril; Smp. (C-N) 79,4 °C, Klp. (N-I) 99,5 °C;
trans-4-[trans-4-(3E-Hexenyl)cyclohexyl]cyclohexancarbonitril;
trans-4-[trans-4-(3E-Heptenyl)cyclohexyl]cyclohexancarbonitril;
trans-4-[trans-4-(3E-Octenyl)cyclohexyl]cyclohexancarbonitril;
trans-4-[trans-4-(3E-Nonenyl)cyclohexyl]cyclohexancarbonitril;
trans-4-[trans-4-(3E-Decenyl)cyclohexyl]cyclohexancarbonitril.

Durch Umsetzung des 4-(4-Oxocyclohexyl)benzamids in analoger Weise zu den Stufen h) und i), Acetalisierung des durch Kristallisation erhaltenen 4-(trans-4-Formylcyclohexyl)benzamids mit Aethylenglykol in Gegenwart von p-Toluolsulfonsäure, weitere Umsetzung des Dioxolans in analoger Weise zu den Stufen c) bis g), anschliessende Wittig-Reaktion in analoger Weise zu Stufe j) und gegebenenfalls E/Z-Isomerisierung in analoger Weise zu Beispiel 1k) können folgende Verbindungen hergestellt werden:
trans-4-(trans-4-Vinylcyclohexyl)cyclohexancarbonitril, Smp. (C-N) 55,7 °C, Klp. (N-I) 59 °C;
trans-4-[trans-4-(1E-Propenyl)cyclohexyl]cyclohexancarbonitril, Smp. (C-N) 64,9 °C, Klp. (N-I) 100,1 °C;
trans-4-[trans-4-(1E-Butenyl)cyclohexyl]cyclohexancarbonitril, Smp. (C-S) 38,5 °C, Phasenübergang (C-N) 59 °C, Klp. (N-I) 91 °C;
trans-4-[trans-4-(1E-pentenyl)cyclohexyl]cyclohexancarbonitril, Smp. (C-N) 59,3 °C, Klp. (N-I) 91,7 °C; trans-4-[trans-4-(1E-Hexenyl )cyclohexyl]cyclohexancarbonitril;
trans-4-[trans-4-(1E-Heptenyl)cyclohexyl]cyclohexancarbonitril;
trans-4-[trans-4-(1E-Octenyl)cyclohexyl]cyclohexancarbonitril;
trans-4-[trans-4-(1E-Nonenyl)cyclohexyl]cyclohexancarbonitril;
trans-4-[trans-4-(1E-Decenyl)cyclohexyl]cyclohexancarbonitril.

Ausgehend von 4-[2-(4-Oxocyclohexyl)äthyl]benzamid [herstellbar aus dem in Mol. Cryst. Liq. Cryst. 131, 327 (1985) beschriebenen Nitril] können in analoger Weise zur obigen Methode auch die folgenden Verbindungen hergestellt werden:
trans-4-[2-(trans-4-(4-Pentenyl)cyclohexyl)äthyl]cyclohexancarbonitril;
trans-4-[2-(trans-4-(4Z-Hexenyl)cyclohexyl)äthyl]cyclohexancarbonitril;
trans-4-[2-(trans-4-(4Z-Heptenyl)cyclohexyl)äthyl]cyclohexancarbonitril;
trans-4-[2-(trans-4-(4Z-Octenyl)cyclohexyl)äthyl]cyclohexancarbonitril;
trans-4-[2-(trans-4-(4Z-Nonenyl)cyclohexyl)äthyl]cyclohexancarbonitril;
trans-4-[2-(trans-4-(4Z-Decenyl)cyclohexyl)äthyl]cyclohexancarbonitril;
trans-4-[2-(trans-4-(3-Butenyl)cyclohexyl)äthyl]cyclohexancarbonitril;
trans-4-[2-(trans-4-(3E-Pentenyl)cyclohexyl)äthyl]cyclohexancarbonitril;
trans-4-[2-(trans-4-(3E-Hexenyl)cyclohexyl)äthyl]cyclohexancarbonitril;

trans-4-[2-(trans-4-(3E-Heptenyl)cyclohexyl)äthyl]cyclohexancarbonitril;
trans-4-[2-(trans-4-(3E-Octenyl)cyclohexyl)äthyl]cyclohexancarbonitril;
trans-4-[2-(trans-4-(3E-Nonenyl)cyclohexyl)äthyl]cyclohexancarbonitril;
trans-4-[2-(trans-4-(3E-Decenyl)cyclohexyl)äthyl]cyclohexancarbonitril;
trans-4-[2-(trans-4-Vinylcyclohexyl)äthyl]cyclohexancarbonitril;
trans-4-[2-(trans-4-(1E-Propenyl)cyclohexyl)äthyl]cyclohexancarbonitril;
trans-4-[2-(trans-4-(1E-Butenyl)cyclohexyl)äthyl]cyclohexancarbonitril;
trans-4-[2-(trans-4-(1E-Pentenyl)cyclohexyl)äthyl]cyclohexancarbonitril;
trans-4-[2-(trans-4-(1E-Hexenyl)cyclohexyl)äthyl]cyclohexancarbonitril;
trans-4-[2-(trans-4-(1E-Heptenyl)cyclohexyl)äthyl]cyclohexancarbonitril;
trans-4-[2-(trans-4-(1E-Octenyl)cyclohexyl)äthyl]cyclohexancarbonitril;
trans-4-[2-(trans-4-(1E-Nonenyl)cyclohexyl)äthyl]cyclohexancarbonitril;
trans-4-[2-(trans-4-(1E-Decenyl)cyclohexyl)äthyl]cyclohexancarbonitril.

## Beispiel 3

a) Eine Lösung von 1,71 g trans-4-[trans-4-(4-Pentenyl)cyclohexyl]cyclohexancarbonitril (hergestellt nach Beispiel 2) in 30 ml Diäthylenglykol wurde mit 3,11 g Kaliumhydroxid versetzt und 3 Stunden bei 130° C gerührt. Dann wurde das Gemisch auf Eiswasser gegossen, mit 25-prozentiger Salzsäure angesäuert und dreimal mit Diäthyläther extrahiert. Die organischen Phasen wurden vereinigt, dreimal mit Wasser gewaschen, über Magnesiumsulfat getrocknet und eingedampft. Umkristallisation des braunen, kristallinen Rückstandes (1,74 g) aus 30 ml Hexan ergab 996 mg trans-4-[trans-4-(4-Pentenyl)cyclohexyl]-cyclohexancarbonsäure als gelbliche Kristalle.

b) Eine Lösung von 996 mg trans-4-[trans-4-(4-Pentenyl)cyclohexyl]cyclohexancarbonsäure in 80 ml Methylenchlorid wurde mit 752 mg p-Fluorphenol, 61 mg 4-(Dimethylamino)pyridin und 1,03 g Dicyclohexylcarbodiimid versetzt und 15 Stunden bei Raumtemperatur gerührt. Anschliessend wurde das Reaktionsgemisch filtriert. Das Filtrat wurde eingedampft und der erhaltene Rückstand an Kieselgel mit Aethylacetat/Petroläther (Vol. 3:97) chromatographisch gereinigt. Kristallisation des erhaltenen Produktes (1,24 g) aus 40 ml Hexan ergab 757 mg reinen trans-4-[trans-4-(4-Pentenyl)cyclohexyl]-cyclohexancarbonsäure -4-fluorphenylester mit Smp. (C-N) 70,3° C und Klp. (N-I) 158,7° C.

In analoger Weise können folgende Verbindungen hergestellt werden:
trans-4-(4-Pentenyl)cyclohexancarbonsäure-4-fluorphenylester, Smp. 31,3° C;
trans-4-(4-Pentenyl)cyclohexancarbonsäure-3,4-difluorphenylester, Smp. 12,4° C;
trans-4-(4-Pentenyl)cyclohexancarbonsäure-4-chlorphenylester;
4-(3-Butenyloxy)benzoesäure-4-fluorphenylester, Smp. 65° C;
4-(3-Butenyloxy)benzoesäure-3,4-difluorphenylester, Smp. 47,5° C;
4-(3-Butenyloxy)benzoesäure-4-chlorphenylester;
trans-4-[trans-4-(4-Pentenyl)cyclohexyl]cyclohexancarbonsäure-3,4-difluorphenylester;
trans-4-[trans-4-(4-Pentenyl)cyclohexyl]cyclohexancarbonsäure-4-chlorphenylester;
trans-4-[trans-4-(4-Pentenyl)cyclohexyl]cyclohexancarbonsäure-3-chlor-4-fluorphenylester;
trans-4-[trans-4-(4-Pentenyl)cyclohexyl]cyclohexancarbonsäure-3-fluor-4-chlorphenylester;
4-[trans-4-(4-Pentenyl)cyclohexyl]benzoesäure-4-fluorphenylester:
4-[trans-4-(4-Pentenyl)cyclohexyl]benzoesäure-3,4-difluorphenylester;
5-[trans-4-(4-Pentenyl)cyclohexyl]-2-pyrimidincarbonsäure-4-fluorphenylester;
2-[trans-4-(4-Pentenyl)cyclohexyl]-5-pyrimidincarbonsäure-4-fluorphenylester;
4-[5-(4-Pentenyl)-2-pyrimidinyl]benzoesäure-4-fluorphenylester;
4-[2-(4-pentenyl)-5-pyrimidinyl]benzoesäure-4-fluorphenylester;
trans-4-(4Z-Hexenyl)cyclohexancarbonsäure-4-fluorphenylester;
trans-4-(4Z-Hexenyl)cyclohexancarbonsäure-3,4-difluorphenylester;
4-(3Z-Pentenyloxy)benzoesäure-4-fluorphenylester;
trans-4-[trans-4-(4Z-Hexenyl)cyclohexyl]cyclohexancarbonsäure-4-fluorphenylester;
4-[trans-4-(4Z-Hexenyl)cyclohexyl]benzoesäure-4-fluorphenylester;
trans-4-(3-Butenyl)cyclohexancarbonsäure-3,4-difluorphenylester, Smp. 42,0° C;
trans-4-(3-Butenyl)cyclohexancarbonsäure-4-chlorphenylester;
4-Allyloxybenzoesäure-4-fluorphenylester;

4-Allyloxybenzoesäure-3,4-difluorphenylester;
4-Allyloxybenzoesäure-4-chlorphenylester;
trans-4-[trans-4-(3-Butenyl)cyclohexyl]cyclohexancarbonsäure-3,4-difluorphenylester, Smp. (C-N) 55,1 °C, Klp. (N-I) 153,6 °C;
trans-4-[trans-4-(3-Butenyl)cyclohexyl]cyclohexancarbonsäure-4-chlorphenylester, Smp. (C-N) 78,3 °C, Klp. (N-I) 213,5 °C;
trans-4-[trans-4-(3-Butenyl)cyclohexyl]cyclohexancarbonsäure-3-chlor-4-fluorphenylester;
trans-4-[trans-4-(3-Butenyl)cyclohexyl]cyclohexancarbonsäure-3-fluor-4-chlorphenylester;
4-[trans-4-(3-Butenyl)cyclohexyl]benzoesäure-3,4-difluorphenylester;
trans-4-(3E-Pentenyl)cyclohexancarbonsäure-3,4-difluorphenylester;
4-(2E-Butenyloxy)benzoesäure-4-fluorphenylester.

## Beispiel 4

a) Eine Grignard-Lösung aus 3,59 g Magnesium und 16,75 ml 1-Brom-4-fluorbenzol in 70 ml Tetrahydrofuran wurde bei 0 °C innert 30 Minuten tropfenweise mit einer Lösung von 33,1 g 4-[trans-4 -[2-(1,3-Dioxolan-2-yl)äthyl]cyclohexyl]cyclohexanon (hergestellt nach Beispiel 1) in 90 ml Tetrahydrofuran versetzt. Das Reaktionsgemisch wurde noch 4 Stunden bei Raumtemperatur gerührt und dann 1,5 Stunden zum Sieden erhitzt. Anschliessend wurde das Reaktionsgemisch abkühlen gelassen, mit 100 ml Diäthyläther verdünnt und mit 80 ml halbgesättigter Ammoniumchlorid-Lösung gewaschen. Die wässrige Phase wurde mit 100 ml Diäthyläther nachextrahiert. Die vereinigten organischen Phasen wurden dreimal mit je 60 ml gesättigter Kochsalzlösung gewaschen, über Natriumsulfat getrocknet, filtriert und eingedampft. Hierbei wurden 41,0 g rohes 1-[4-[trans-4-(2-(1,3-Dioxolan-2-yl)äthyl)cyclohexyl] -1-hydroxycyclohexyl]-4-fluorbenzol erhalten.

b) Eine Lösung von 41,0 g rohem 1-[4-[trans-4-(2-(1,3-Dioxolan-2-yl)äthyl]cyclohexyl] -1-hydroxycyclohexyl]4-fluorbenzol in 225 ml m-Xylol wurde mit 15 g Kaliumhydrogensulfat versetzt und das Gemisch unter Rühren 11 Stunden zum Sieden erhitzt. Nach dem Erkalten wurde das Salz abfiltriert. Das Filtrat wurde mit 250 ml Diäthyläther verdünnt, mit 200 ml gesättigter Natriumhydrogencarbonat-Lösung und zweimal mit je 150 ml Wasser gewaschen, über Natriumsulfat getrocknet und eingeengt. Hierbei wurden 30,3 g rohes 1-[4-[trans-4-(2-(1,3-Dioxolan-2-yl)äthyl)cyclohexyl] -1-cyclohexenyl]-4-fluorbenzol erhalten.

c) Eine Lösung von 31,5 g rohem 1-[4-[trans-4-(2-(1,3-Dioxolan-2-yl)äthyl)cyclohexyl] -1-cyclohexenyl]-4-fluorbenzol und 0,5 ml Triäthylamin in 1 l Toluol wurde mit 4,5 g 5-prozentiger Palladium-Kohle bei Raumtemperatur und Normaldruck hydriert, bis die Wasserstoffaufnahme zum Stillstand kam. Der Katalysator wurde abfiltriert und das Filtrat eingedampft. Das erhaltene 1-[4-[trans-4-(2-(1,3-Dioxolan -2-yl)-äthyl)cyclohexyl]cyclohexyl]-4-fluorbenzol (31,1 g; cis/trans-Verhältnis ca. 1:1) wurde zur Isomerisierung mit einer Lösung von 10,0 g Kalium-tert.butylat in 310 ml N,N-Dimethylformamid versetzt und 23 Stunden auf 105 °C erhitzt. Anschliessend wurde das Reaktionsgemisch auf 400 g Eis und 100 ml gesättigte Natriumhydrogencarbonat-Lösung gegossen. Das Gemisch wurde einmal mit 500 ml und zweimal mit je 250 ml Diäthyläther extrahiert. Die organischen Phasen wurden dreimal mit je 200 ml Wasser gewaschen, über Natriumsulfat getrocknet, filtriert und eingedampft. Hierbei wurden 30,5 g überwiegend festes 1-[trans-4-[trans-4-(2-(1,3-Dioxolan -2-yl)äthyl)cyclohexyl]cyclohexyl]-4-fluorbenzol erhalten, welches ohne zusätzliche Reinigung weiterverwendet wurde.

In analoger Weise können folgende Verbindungen hergestellt werden:
1-[trans-4-[trans-4-(2-(1, 3-Dioxolan-2-yl)äthyl)cyclohexyl]cyclohexyl]-3,4-difluorbenzol;
1-[trans-4-[trans-4-(2-(1,3-Dioxolan-2-yl)äthyl)cyclohexyl]cyclohexyl]-3-chlor-4-fluorbenzol;
1-[trans-4-[trans-4-(2-(1,3-Dioxolan-2-yl)äthyl)cyclohexyl]cyclohexyl]-3-fluor-4-chlorbenzol;
1-[trans-4-[trans-4-(2-(1,3-Dioxolan-2-yl)äthyl)cyclohexyl]cyclohexyl]-4-chlorbenzol;
1-[trans-4-[2-[trans-4-(2-(1,3-Dioxolan-2-yl)äthyl)cyclohexyl]äthyl]cyclohexyl]-4-fluorbenzol;
1-[trans-4-[2-[trans-4-(2-(1,3-Dioxolan-2-yl)äthyl)cyclohexyl]äthyl]cyclohexyl]-3,4-difluorbenzol;
1-[trans-4-[2-[trans-4-(2-(1, 3-Dioxolan-2-yl)äthyl)cyclohexyl]äthyl]cyclohexyl]-3-chlor-4-fluorbenzol;
1-[trans-4-[2-[trans-4-(2-(1, 3-Dioxolan-2-yl)äthyl)cyclohexyl]äthyl]cyclohexyl]-4-chlorbenzol;

1-[trans-4-[2-[trans-4-(2-(1, 3-Dioxolan-2-yl)äthyl)cyclohexyl]äthyl]cyclohexyl]-3-fluor-4-chlorbenzol.

## Beispiel 5

a) Ein Gemisch von 29,1 g rohem 1-[trans-4-[trans-4-(2-(1,3-Dioxolan -2-yl)äthyl)cyclohexyl]-cyclohexyl]-4-fluorbenzol, 200 ml Dioxan, 200 ml Eisessig und 400 ml Wasser wurde unter Rühren und Stickstoffbegasung 5 Stunden zu leichtem Sieden erhitzt (Badtemperatur 115°C). Dann wurde das Reaktionsgemisch auf 500 g Eis gegossen. Die wässrige Phase wurde abgetrennt und dreimal mit je 400 ml Diäthyläther extrahiert. Die vereinigten organischen Phasen wurden mit 500 ml gesättigter Natriumhydrogencarbonat-Lösung und mit 500 ml Wasser gewaschen, über Natriumsulfat getrocknet, filtriert und eingeengt. Hierbei wurden 25,2 g roher, fester 3-[trans-4-[trans -4-(4-Fluorphenyl)cyclohexyl]-cyclohexyl]propionaldehyd erhalten.

b) Eine Suspension von 9,1 g Methoxymethyl-triphenylphosphoniumchlorid in 50 ml Diäthyläther wurde unter Stickstoffbegasung mit 2,85 g Kalium-tert.butylat versetzt. Die rote Suspension wurde noch 30 Minuten bei Raumtemperatur gerührt und dann bei 0°C tropfenweise mit einer Lösung von 5,43 g rohem 3-[trans-4 -[trans-4-(4-Fluorphenyl)cyclohexyl]cyclohexyl]propionaldehyd in 30 ml trockenem Diäthyläther versetzt. Das Reaktionsgemisch wurde noch 90 Minuten bei Raumtemperatur gerührt, dann auf 300 ml Hexan gegossen und filtriert. Chromatogrpahische Reinigung des eingeengten Filtrates an Kieselgel mit Hexan ergab 4,9 g festes 1-[trans-4-[trans-4-(4-Methoxy -3-butenyl)cyclohexyl]cyclohexyl]-4-fluorbenzol.

c) Unter Rühren und Stickstoffbegasung wurde ein Gemisch von 2,48 g 1-[trans-4-[trans-4-(4-Methoxy -3-butenyl)cyclohexyl]cyclohexyl]-4-fluorbenzol, 30 ml Dioxan, 20 ml Eisessig und 40 ml Wasser 6 Stunden zu leichtem Sieden erhitzt (Badtemperatur 115°C). Nach dem Erkalten wurde die Suspension mit 70 ml Wasser verdünnt. Die wässrige Phase wurde abgetrennt und dreimal mit je 80 ml Diäthyläther extrahiert. Die vereinigten organischen Phasen wurden zweimal mit je 100 ml Wasser gewaschen, über Natriumsulfat getrocknet, filtriert und eingeengt. Hierbei wurden 2,3 g fester 4-[trans-4-[trans -4-(4-Fluorphenyl)cyclohexyl]cyclohexyl]butyraldehyd erhalten.

d) Eine Suspension von 5,19 g Methyl-triphenylphosphoniumbromid in 80 ml Diäthyläther wurde unter Stickstoffbegasung mit 1,55 g Kalium-tert.butylat versetzt. Die gelbe Suspension wurde noch 45 Minuten bei Raumtemperatur gerührt und dann bei 0°C tropfenweise mit einer Lösung von 2,3 g 4-[trans-4-[trans -4-(4-Fluorphenyl)cyclohexyl]cyclohexyl]butyraldehyd versetzt. Das Reaktionsgemisch wurde noch 2 Stunden bei 0°C gerührt und dann mit 60 ml Wasser verdünnt. Die wässrige Phase wurde abgetrennt und zweimal mit je 60 ml Hexan extrahiert. Die vereinigten organischen Phasen wurden mit Wasser neutral gewaschen, über Natriumsulfat getrocknet, filtriert und eingeengt. Chromatographische Reinigung des Rückstandes an Kieselgel mit Hexan ergab 1,89 g Rohprodukt. Nach zweimaliger Umkristallisation aus Aceton bei -20°C wurden 1,22 g 1-[trans-4-[trans-4-(4-Pentenyl)cyclohexyl]cyclohexyl] -4-fluorbenzol mit Smp. (C-N) 65,7°C und Klp. (N-I) 129,7°C erhalten.

In analoger Weise können die in Beispiel 3 genannten 4-Alkenylverbindungen sowie die folgenden Verbindungen hergestellt werden:

1-[trans-4-[trans-4-(4-Pentenyl)cyclohexyl]cyclohexyl3,4-difluorbenzol;
1-[trans-4-[trans-4-(4-Pentenyl)cyclohexyl]cyclohexyl3-chlor-4-fluorbenzol;
1-[trans-4-[trans-4-(4-Pentenyl)cyclohexyl]cyclohexyl4-chlorbenzol;
1-[trans-4-[trans-4-(4-Pentenyl)cyclohexyl]cyclohexyl3-fluor-4-chlorbenzol;
1-[trans-4-[2-(trans-4-(4-Pentenyl)cyclohexyl)äthyl]cyclohexyl]-4-fluorbenzol;
1-[trans-4-[2-(trans-4-(4-Pentenyl)cyclohexyl)äthyl]cyclohexyl]-3,4-difluorbenzol;
1-[trans-4-[2-(trans-4-(4-Pentenyl)cyclohexyl)äthyl]cyclohexyl]-3-chlor-4-fluorbenzol;
1-[trans-4-[2-(trans-4-(4-Pentenyl)cyclohexyl)äthyl]cyclohexyl]-4-chlorbenzol;
1-[trans-4-[2-(trans-4-(4-Pentenyl)cyclohexyl)äthyl]cyclohexyl]-3-fluor-4-chlorbenzol;
1-[[trans-4-(trans-4-(4-Pentenyl)cyclohexyl)cyclohexyl]methoxy]-4-fluorbenzol;
1-[[trans-4-(trans-4-(4-Pentenyl)cyclohexyl)cyclohexyl]methoxy]-3,4-difluorbenzol;
1-[[trans-4-(trans-4-(4-Pentenyl)cyclohexyl)cyclohexyl]methoxy]-3-chlor-4-fluorbenzol;
1-[[trans-4-(trans-4-(4-Pentenyl)cyclohexyl)cyclohexyl]methoxy]-4-chlorbenzol;
1-[[trans-4-(trans-4-(4-Pentenyl)cyclohexyl)cyclohexyl]methoxy]-3-fluor-4-chlorbenzol;
1-[2-[trans-4-(trans-4-(4-Pentenyl)cyclohexyl)cyclohexyl]äthyl]-4-fluorbenzol, Smp. (C-$S_B$) 7,1°C, Phasenübergang ($S_B$-N) 93°C, Klp. (N-I) 116,6°C;
1-[2-[trans-4-(trans-4-(4-Pentenyl)cyclohexyl)cyclohexyl]äthyl]-3,4-difluorbenzol;

1-[2-[trans-4-(trans-4-(4-Pentenyl)cyclohexyl)cyclohexyl]äthyl]-3-chlor-4-fluorbenzol;
1-[2-[trans-4-(trans-4-(4-Pentenyl)cyclohexyl)cyclohexyl]äthyl]-4-chlorbenzol;
1-[2-[trans-4-(trans-4-(4-Pentenyl)cyclohexyl)cyclohexyl]äthyl]-3-fluor-4-chlorbenzol:

4-Fluorbenzoesäure-trans-4-[trans-4-(4-pentenyl)cyclohexyl]cyclohexylester;
3,4-Difluorbenzoesäure-trans-4-[trans-4-(4-pentenyl)cyclohexyl]cyclohexylester;
3-Chlor-4-fluorbenzoesäure-trans-4-[trans-4-(4-pentenyl)cyclohexyl]cyclohexylester;
4-Chlorbenzoesäure-trans-4-[trans-4-(4-pentenyl)cyclohexyl]cyclohexylester;
3-Fluor-4-chlorbenzoesäure-trans-4-[trans-4-(4-pentenyl)cyclohexyl]cyclohexylester;
trans-4-[trans-4-(4-Pentenyl)cyclohexyl]cyclohexyl-4-fluorbenzyläther;
trans-4-[trans-4-(4-Pentenyl)cyclohexyl]cyclohexyl-3,4-difluorbenzyläther;
trans-4-[trans-4-(4-Pentenyl)cyclohexyl]cyclohexyl-3-chlor-4-fluorbenzyläther;
trans-4-[trans-4-(4-Pentenyl)cyclohexyl]cyclohexyl-4-chlorbenzyläther;
trans-4-[trans-4-(4-Pentenyl)cyclohexyl]cyclohexyl-3-fluor-4-chlorbenzyläther;
1-[trans-4-[trans-4-(4Z-Hexenyl)cyclohexyl]cyclohexyl]-4-fluorbenzol;
1-[trans-4-[trans-4-(4Z-Hexenyl)cyclohexyl]cyclohexyl]-3,4-difluorbenzol;
1-[trans-4-[2-(trans-4-(4Z-Hexenyl)cyclohexyl)äthyl]cyclohexyl]-4-fluorbenzol;
1-[trans-4-[2-(trans-4-(4Z-Hexenyl)cyclohexyl)äthyl]cyclohexyl]-3,4-difluorbenzol;
1-[[trans-4-(trans-4-(4Z-Hexenyl)cyclohexyl)cyclohexyl]methoxy]-4-fluorbenzol;
1-[[trans-4-(trans-4-(4Z-Hexenyl)cyclohexyl)cyclohexyl]methoxy]-3,4-difluorbenzol;
1-[2-[trans-4-(trans-4-(4Z-Hexenyl)cyclohexyl)cyclohexyl]äthyl]-4-fluorbenzol;
1-[2-[trans-4-(trans-4-(4Z-Hexenyl)cyclohexyl)cyclohexyl]äthyl]-3,4-difluorbenzol;
4-Fluorbenzoesäure-trans-4-[trans-4-(4Z-hexenyl)cyclohexyl]cyclohexylester;
3,4-Difluorbenzoesäure-trans-4-[trans-4-(4Z-hexenyl)cyclohexyl]cyclohexylester;
trans-4-[trans-4-(4Z-Hexenyl)cyclohexyl]cyclohexyl-4-fluorbenzyläther;
trans-4-[trans-4-(4Z-Hexenyl)cyclohexyl]cyclohexyl-3,4-difluorbenzyläther.

Durch Weglassen der Stufen b) und c) können in analoger Weise auch die in Beispiel 3 genannten 3-Alkenylverbindungen und weitere 3-Alkenylderivate hergestellt werden, wie 1-[[trans-4-(trans-4-(3-Butenyl)-cyclohexyl)cyclohexyl]methoxy]-4-fluorbenzol, Smp. (C-N) 82,2° C, Klp. (N-I) 131,7° C;
trans-4-[trans-4-(3-Butenyl)cyclohexyl]cyclohexyl-4-fluorbenzyläther, Smp. (C-N) 37,7° C, Klp. (N-I) 92,8° C.

## Beispiel 6

Zur Untersuchung der Abhängigkeit der optischen und elektro-optischen Eigenschaften von der Konzentration an Isothiocyanat der Formel II wurde ein Gemisch von Bicyclohexylverbindungen der Formel I (Mischung A) mit unterschiedlichen Mengen an 4-(trans-4-Propylcyclohexyl)phenylisothiocyanat gemischt. Die optischen und elektro-optischen Daten wurden bei 22° C gemessen. Um einen allfälligen Einfluss der Klärpunktsänderung zu kompensieren, wurden Δn und $V_{10}$ ebenfalls bei einer Temperatur 10° C unterhalb des Klärpunktes gemessen. Die relevanten Daten für Mischung A und das Isothiocyanat sind zum Vergleich ebenfalls angegeben.

Basismischung A:

25 Gew.-% trans-4-[trans-4-(3-Butenyl)cyclohexyl]cyclohexancarbonitril,
15 Gew.-% trans-4-[trans-4-(3E-Pentenyl)cyclohexyl]cyclo hexancarbonitril,
60 Gew.-% trans-4-(3E-Pentenyl)-1-(trans-4-methoxycyclohexyl)cyclohexan;
Klp. (N-I) 56,9° C; $V_{10}$ (22° C) = 2,49V, $V_{10}$ (46,9° C) = 2,13V; $t_{on}$ = 11,3 ms, $t_{off}$ = 29,0 ms; $n_o$ (22° C) = 1,475, $n_o$ (46,9° C) = 1,469, Δn (22° C) = 0,063, Δn (46,9° C) = 0,052.

Mischung B:

95 Gew.-% Basismischung A,
5 Gew.-% 4-(trans-4-Propylcyclohexyl)phenylisothiocyanat;
Klp. (N-I) 55,9° C; $V_{10}$ (22° C) = 2,27V, $V_{10}$ (45,9° C) = 1,94V; $t_{on}$ = 12,0 ms, $t_{off}$ = 27,0 ms; $n_o$ (22° C) =

1,477, $n_o$ (45,9° C) = 1,472, Δn (22° C) = 0,070, Δn (45,9° C) = 0,057.

Mischung C:

90 Gew.-% Basismischung A,
10 Gew.-% 4-(trans-4-Propylcyclohexyl)phenylisothiocyanat;
Klp. (N-I) 54.0° C; $V_{10}$ (22° C) = 2,15V, $V_{10}$ (44° C) = 1,82V; $t_{on}$ = 10,7 ms, $t_{off}$ = 24,6 ms; $n_o$ (22° C) = 1,479, $n_o$ (45,9° C) = 1,474, Δn (22° C) = 0,074, Δn (44° C) = 0,063.

Mischung D:

80 Gew.-% Basismischung A,
20 Gew.-% 4-(trans-4-Propylcyclohexyl)phenylisothocyanat;
Klp. (N-I) 50,9° C; $V_{10}$ (22° C) = 2,01V, $V_{10}$ (40,9° C) = 1,71V; $t_{on}$ = 10,5 ms, $t_{off}$ = 21,4 ms; $n_o$ (22° C) = 1,485, $n_o$ (40,9° C) = 1,481, Δn (22° C) = 0,087, Δn (40,9° C) = 0,076.

Mischung E:

70 Gew.-% Basismischung A,
30 Gew.-% 4-(trans-4-Propylcyclohexyl)phenylisothiocyanat;
Klp. (N-I) 48,4° C; $V_{10}$ (22° C) = 1,93V, $V_{10}$ (38,4° C) = 1,66V; $t_{on}$ = 10,9 ms, $t_{off}$ = 20,0 ms; $n_o$ (22° C) = 1,490, $n_o$ (38,4° C) = 1,487, Δn (22° C) = 0,101, Δn (38,4° C) = 0,088.

Mischung F:

50 Gew.-% Basismischung A,
50 Gew.-% 4-(trans-4-Propylcyclohexyl)phenylisothiocyanat;
Klp. (N-I) 44,0° C; $V_{10}$ (22° C) = 1,91V, $V_{10}$ (34° C) = 1,59V; $t_{on}$ = 7,8 ms, $t_{off}$ = 16,0 ms; $n_o$ (22° C) = 1,500, $n_o$ (34° C) = 1,499, Δn (22° C) = 0,127, Δn (34° C) = 0,113.

4-(trans-4-Propylcyclohexyl)phenylisothiocyanat:

Klp. (N-I) 40,9° C. Die Verbindung kristallisierte bei 35° C. Extrapolierte Werte: $V_{10}$ (30,9° C) = 1,50V; $n_o$ (30,9° C) = 1,527; Δn (30,9° C) = 0,187.

Der Brechungsindex und die optische Anisotropie sind im Rahmen der Messgenauigkeit linear abhängig von der Konzentration an Isothiocyanat. Die Ausschaltzeit nimmt im Bereich bis zu etwa 50 Gew.-% an Isothiocyanat rasch ab mit steigender Konzentration an Isothiocyanat, wobei zugleich auch die Einschaltzeit verringert wird. Für die Schwellenspannung ergibt sich eine deutliche nicht-lineare Abnahme im Bereich von 0 bis mindestens etwa 30 Gew.-% an Isothiocyanat.

## Beispiel 7

Basismischungen G, H und K, welche neben Verbindungen der Formel I weitere Flüssigkristallkomponenten enthalten, wurden mit Isothiocyanat der Formel II versetzt und der Einfluss auf die Schwellenspannung, die Ansprechzeiten und die optische Anisotropie gemessen.

Basismischung G:

15 Gew.-% trans-4-[trans-4-(3-Butenyl)cyclohexyl]cyclohexancarbonitril,
12 Gew.-% trans-4-[trans-4-(3E-Pentenyl)cyclohexyl]cyclohexancarbonitril,

10 Gew.-% trans 4-[trans-4-(4-Pentenyl)cyclohexyl]cyclohexancarbonitril,
33 Gew.-% trans-4-Propyl-1-(trans-4-allyloxycyclohexyl)cyclohexan,
20 Gew.-% trans-4-[trans-4-(3-Butenyl)cyclohexyl]cyclohexancarbonsäure-4-fluorphenylester,
10 Gew.-% trans-4-[trans-4-(4-Pentenyl)cyclohexyl]cyclohexancarbonsäure-4-fluorphenylester;
Klp. (N-I) 81,1 °C, Kristallisation nach 1 Tag bei -15 °C; $V_{10}$ = 2,41V, $t_{on}$ (22 °C) = 24 ms, $t_{on}$ (-20 °C) = 544 ms, $t_{on}$ (-30 °C) = 1530 ms, $t_{off}$ (22 °C) = 37 ms; $t_{off}$ (-20 °C) = 488 ms, $t_{off}$ (-30 °C) = 1245 ms; $n_o$ = 1,478, $\Delta n$ = 0.067.

Mischung H:

85 Gew.-% Basismischung G,
15 Gew.-% 4-(trans-4-Propylcyclohexyl)phenylisothiocyanat;
Smp. <-30 °C, Klp. (N-I) = 73,0 °C; $V_{10}$ = 2,00V; $t_{on}$ (22 °C) = 13 ms, $t_{on}$ (-20 °C) = 233 ms, $t_{on}$ (-30 °C) = 666 ms, $t_{off}$ (22 °C) = 27 ms, $t_{off}$ (-20 °C) = 344 ms, $t_{off}$ (-30 °C) = 866 ms; $n_o$ = 1,485 $\Delta n$ -0,084.

Basismischung I:

9 Gew.-% trans-4-[trans-4-(3-Butenyl)cyclohexyl]cyclohexancarbonitril,
6 Gew.-% trans-4-[trans-4-(3E-Pentenyl)cyclohexyl]cyclohexancarbonitril,
6 Gew.-% trans-4-[trans-4-(4-Pentenyl)cyclohexyl]cyclohexancarbonitril,
10 Gew.-% trans-4-(3-Butenyl)-1-(trans-4-äthoxycyclohexyl)cyclohexan,
12 Gew.-% trans-4-(3E-Pentenyl)-1-(trans-4-äthoxycyclohexyl)cyclohexan,
10 Gew.-% 4-[trans-4-(1E-Propenyl)cyclohexyl]benzonitril,
7 Gew.-% 4-[trans-4-(4-Pentenyl)cyclohexyl]benzonitril,
4 Gew.-% trans-4-Propylcyclohexancarbonsäure-4-[trans-4-(3E-pentenyl)cyclohexyl]phenylester,
3 Gew.-% 5-(trans-4-Pentylcyclohexyl)-2-pyrimidincarbonitril,
10 Gew.-% 4-(trans-4-Pentylcyclohexyl)-1-[2-(trans-4-butylcyclohexyl)äthyl]benzol,
4 Gew.-% 4′-(trans-4-Pentylcyclohexyl)-4-[2-(trans-4-butylcyclohexyl)äthyl]biphenyl,
4 Gew.-% 4′-[trans-4-(3E-Pentenyl)cyclohexyl]-4-[2-(trans-4-butylcyclohexyl)äthyl]biphenyl,
7 Gew.-% trans-4-[trans-4-(3-Butenyl)cyclohexyl]cyclohexancarbonsäure-4-Fluorphenylester,
8 Gew.-% trans-4-[trans-4-(3E-Pentenyl)cyclohexyl]cyclohexancarbonsäure-4-fluorphenylester;
Smp. <-30 °C, Klp. (N-I) 98,4 °c; $V_{10}$ = 2,35V; $t_{on}$ (22 °C) = 20 ms, $t_{on}$ (-20 °C) = 404 ms, $t_{on}$ (-30 °C) = 1290 ms, $t_{off}$ (22 °C) = 31 ms, $t_{off}$ (-20 °C) = 530 ms, $t_{off}$ (-30 °C) = 1600 ms; $n_o$ = 1,485, $\Delta n$ = 0,095.

Mischung J:

90 Gew.-% Basismischung I,
10 Gew.-% 4-(trans-4-Propylcyclohexyl)phenylisothiocyanat;
Smp. <-30 °C, Klp. (N-I) 91,5 °C; $V_{10}$ = 2,24V; $t_{on}$ (22 °C) = 15 ms, $t_{on}$ (-20 °C) = 315 ms, $t_{on}$ (-30 °C) = 980 ms; $t_{off}$ (22 °C) = 28 ms, $t_{off}$ (-20 °C) = 480 ms, $t_{off}$ (-30 °C) = 1450 ms; $n_o$ = 1,488, $\Delta n$ -0,107.

Basismischung K:

8,55 Gew.-% trans-4-[trans-4-(3-Butenyl)cyclohexyl]cyclohexancarbonitril,
5,70 Gew.-% trans-4-[trans-4-(3E-Pentenyl)cyclohexyl]cyclohexancarbonitril,
9,50 Gew.-% trans-4-(3-Butenyl)-1-(trans-4-äthoxycyclohexyl)cyclohexan,
9,50 Gew.-% trans-4-(3E-Pentenyl)-1-(trans-4-methoxycyclohexyl)cyclohexan,
9,50 Gew.-% 4-[trans-4-(1E-Propenyl)cyclohexyl]benzonitril,
5,70 Gew.-% 4-[trans-4-(3E-Pentenyl)cyclohexyl]benzonitril,
6,65 Gew.-% 4-[trans-4-(4-Pentenyl)cyclohexyl]benzonitril,
3,80 Gew.-% trans-4-Propylcyclohexancarbonsäure-4-[trans-4-(3E-pentenyl)cyclohexyl]phenylester,
2,85 Gew.-% 5-(trans-4-Butylcyclohexyl)-2-pyrimidincarbonitril,
2,85 Gew.-% 5-(trans-4-Pentylcyclohexyl)-2-pyrimidincarbonitril,
8,55 Gew.-% 4-(trans-4-Pentylcyclohexyl)-1-[2-(trans-4-butylcyclohexyl)äthyl]benzol,

3,80 Gew.-% 4′-[trans-4-(3E-Pentenyl)cyclohexyl]-4-[2-(trans-4-butylcyclohexyl)äthyl]biphenyl,
5,00 Gew.-% trans-4-Propylcyclohexancarbonsäure-4-fluorphenylester,
7,60 Gew.-% trans-4-(trans-4-Propylcyclohexyl)cyclohexancarbonsäure-4-fluorphenylester,
6,65 Gew-% trans-4-(trans-4-Pentylcyclohexyl)cyclohexancarbonsäure-4-fluorphenylester,
3,80 Gew.-% 5-(trans-4-Pentylcyclohexyl)-2-[4-(trans-4-propylcyclohexyl)phenyl pyrimidin;
Smp. <-30 °C, Klp. (N-I) 90,3 °C; $V_{10}$ = 1,93V; $t_{on}$ (22 °C) = 19 ms, $t_{on}$ (-20 °C) = 400 ms, $t_{on}$ (-30 °C) = 1320 ms, $t_{off}$ (22 °C) = 31 ms, $t_{off}$ (-20 °C) = 550 ms, $t_{off}$ (-30 °C) = 1700 ms; $n_o$ = 1,485, Δn = 0,098.

Mischung L:

90 Gew.-% Basismischung K,
10 Gew.-% 4-(trans-4-Propylcyclohexyl)phenylisothiocyanat;
Smp. <-30 °C, Klp. (N-I) 83,3 °C; $V_{10}$ = 1,91V; $t_{on}$ (22 °C) = 16 ms, $t_{on}$ (-20 °C) = 340 ms, $t_{on}$ (-30 °C) = 1050 ms, $t_{off}$ (22 °C) = 29 ms, $t_{off}$ (-20 °C) = 500 ms, $t_{off}$ (-30 °C) = 1500 ms; $n_o$ = 1, 488, Δn = 0,108.

## Beispiel 8

Die folgenden Mischungen sind Beispiele weiterer erfindungsgemässer Gemische:

Mischung M:

5 Gew.-% trans-4-[trans-4-(3-Butenyl)cyclohexyl]cyclohexancarbonitril,
7 Gew.-% trans-4-[trans-4-(3E-Pentenyl)cyclohexyl]cyclohexancarbonitril,
12 Gew.-% trans-4-Propyl-1-(trans-4-allyloxycyclohexyl)cyclohexan,
10 Gew.-% trans-4-(3E-Pentenyl)-1-(trans-4-äthoxycyclohexyl)cyclohexan,
6 Gew.-% 4-(trans-4-Propylcyclohexyl)phenylisothiocyanat,
12 Gew.-% 4-(2E-Butenyloxy)-1-(trans-4-propylcyclohexyl)benzol,
10 Gew.-% 4-[trans-4-(1E-Propenyl)cyclohexyl]benzonitril,
8 Gew.-% trans-4-Propylcyclohexancarbonsäure-4-[trans-4-(3E-pentenyl)cyclohexyl]phenylester,
10 Gew.-% 4-(trans-4-Pentylcyclohexyl)-1-[2-(trans-4-butylcyclohexyl)äthyl]benzol,
5 Gew.-% 4′-(trans-4-Pentylcyclohexyl)-4-[2-(trans-4-butylcyclohexyl)äthyl]biphenyl,
4 Gew.-% trans-4-[trans-4-(3-Butenyl)cyclohexyl]cyclohexancarbonsäure-4-fluorphenylester,
8 Gew.-% trans-4-[trans-4-(3E-Pentenyl)cyclohexyl]cyclohexancarbonsäure-4-fluorphenylester,
3 Gew.-% 5-(trans-4-Pentylcyclohexyl)-2-[4-(trans-4-propylcyclohexyl)phenyl]pyrimidin;
Smp. <-30 °C, Klp. (N-I) 102 °C; $V_{10}$ = 2,78V; $t_{on}$ (22 °C) = 18 ms, $t_{on}$ (-20 °C) = 340 ms, $t_{on}$ (-30 °C) = 1119 ms, $t_{off}$ (22 °C) = 24 ms, $t_{off}$ (-20 °C) = 330 ms, $t_{off}$ (-30 °C) = 930 ms; $n_o$ = 1, 488, Δn = 0,106.

Mischung N:

7,86 Gew.-% trans-4-[trans-4-(3-Butenyl)cyclohexyl]cyclohexancarbonitril,
5,24 Gew.-% trans-4-[trans-4-(3E-Pentenyl)cyclohexyl]cyclohexancarbonitril,
5,24 Gew.-% trans-4-[trans-4-(4-Pentenyl)cyclohexyl]cyclohexancarbonitril,
8,73 Gew.-% trans-4-(3-Butenyl)-1-(trans-4-äthoxycyclohexyl)cyclohexan,
10,48 Gew.-% trans-4-(3E-Pentenyl)-1-(trans-4-äthoxycyclohexyl)cyclohexan,
10,00 Gew.-% 4-(trans-4-Propylcyclohexyl)phenylisothiocyanat,
8,73 Gew.-% 4-[trans-4-(1E-Propenyl)cyclohexyl]benzonitril,
6,11 Gew.-% 4-[trans-4-(4-Pentenyl)cyclohexyl]benzonitril,
3,49 Gew.-% trans-4-Propylcyclohexancarbonsäure-4-[trans-4-(3E-pentenyl)cyclohexyl]phenylester,
2,62 Gew.-% 5-(trans-4-Pentylcyclohexyl)-2-pyrimidincarbonitril,
8,73 Gew.-% 4-(trans-4-Pentylcyclohexyl)-1-[2-(trans-4-butylcyclohexyl)äthyl]benzol,
3,49 Gew.-% 4′-(trans-4-Pentylcyclohexyl)-4-[2-(trans-4-butylcyclohexyl)äthyl]biphenyl,
3,49 Gew.-% 4′-[trans-4-(3E-Pentenyl)cyclohexyl]-4-[2-(trans-4-butylcyclohexyl)äthyl]biphenyl,
6,11 Gew.-% trans-4-[trans-4-(3-Butenyl)cyclohexyl]cyclohexancarbonsäure-4-fluorphenylester,

6,98 Gew.-% trans-4-[trans-4-(3E-Pentenyl)cyclohexyl]cyclohexancarbonsäure-4-fluorphenylester,
2,70 Gew.-% 5-(trans-4-Pentylcyclohexyl)-2-[4-(trans-4-propylcyclohexyl)phenyl]pyrimidin;
Smp. <-30 °C, Klp. (N-I) 96,1 °C; $V_{10}$ = 2,33V; $t_{on}$ (22 °C) = 17 ms, $t_{on}$ (-20 °C) = 395 ms, $t_{on}$ (-30 °C) = 1280 ms, $t_{off}$ (22 °C) = 31 ms, $t_{off}$ (-20 °C) = 570 ms, $t_{off}$ (-30 °C) = 1670 ms; $n_o$ = 1,488, Δn = 0,107.

<u>Mischung O</u>

15 Gew.-% trans-4-(3-Butenyl)-1-(trans-4-äthoxycyclohexyl)cyclohexan,
15 Gew.-% trans-4-(3E-Pentenyl)-1-(trans-4-äthoxycyclohexyl)cyclohexan,
8 Gew.-% 4-(trans-4-Propylcyclohexyl)phenylisothiocyanat,
7 Gew.-% 4-Aethoxy-1-(trans-4-propylcyclohexyl)benzol,
8 Gew.-% 4-[trans-4-(1E-Propenyl)cyclohexyl]benzonitril,
12 Gew.-% 4-[trans-4-(3-Butenyl)cyclohexyl]benzonitril,
10 Gew.-% 4-Aethoxy-1-[2-(tans-4-propylcyclohexl)äthyl]benzol,
7 Gew.-% 4-[trans-4-(3E-Pentenyl)cyclohexyl]-4′-äthylbiphenyl,
5 Gew.-% 4-[trans-4-(3E-Pentenyl)cyclohexyl]-4′-propylbiphenyl,
5 Gew.-% trans-4-Propylcyclohexancarbonsäure-4-[trans-4-(3E-pentenyl)cyclohexyl]phenylester,
8 Gew.-% 4-(tans-4-Pentylcyclohexyl)-1-[2-(trans-4-butylcyclohexyl)äthyl]benzol;
Smp. <-30 °C, Klp. (N-I) 70 °C; $V_{10}$ (22 °C) = 2,64V; $t_{on}$ (22 °C) = 14 ms, $t_{on}$ (-20 °C) = 187 ms, $t_{on}$ (-30 °C) = 435 ms, $t_{off}$ (22 °C) = 25 ms, $t_{off}$ (-20 °C) = 255 ms, $t_{off}$ (-30 °C) = 620 ms; Δn = 0,111; $V_{10}$, $t_{on}$ und $t_{off}$ gemessen in einer TN-Zelle mit einem Plattenabstand von 8 µm.

## Ansprüche

1. Flüssigkristallines Gemisch enthaltend eine oder mehrere Verbindungen der allgemeinen Formel

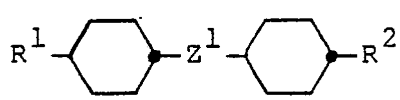

I

worin $R^1$ $C_1$-$C_{12}$-Alkyl oder $C_2$-$C_{12}$-Alkenyl bezeichnet; $R^2$ $C_1$-$C_{12}$-Alkyl, $C_1$-$C_{12}$-Alkoxy, $C_2$-$C_{12}$-Alkenyl, $C_3$-$C_{12}$-Alkenyloxy oder Cyano bedeutet; und $Z^1$ eine einfache Kovalenzbindung oder die Gruppe $-CH_2-CH_2-$ darstellt,
und eine oder mehrere Verbindungen der allgemeinen Formel

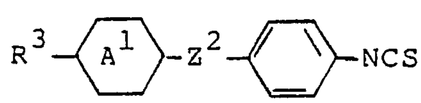

II

worin $R^3$ $C_1$-$C_{12}$-Alkyl oder $C_2$-$C_{12}$-Alkenyl bedeutet; Ring $A^1$ trans-1,4-Cyclohexylen, trans-1,3-Dioxan-2,5-diyl, Pyridin-2,5-diyl oder Pyrimidin-2,5-diyl darstellt; und $Z^2$ eine einfache Kovalenzbindung oder, wenn Ring $A^1$ trans-1,4-Cyclohexylen darstellt, auch die Gruppe $-CH_2CH_2-$ bezeichnet,
in einem Gewichtsverhältnis der Verbindungen der Formel I zu den Verbindungen der Formel II von 2:1 bis 20:1.

2. Flüssigkristallines Gemisch nach Anspruch 1, dadurch gekennzeichnet, dass der Anteil an Verbindungen der Formeln I und II zusammen im Gesamtgemisch mindestens 35 Gew.-%, vorzugsweise mindestens 50 Gew.-% beträgt.

3. Flüssigkristallines Gemisch nach Anspruch 1 oder 2, dadurch gekennzeichnet, dass der Anteil an Verbindungen der Formel II im Gesamtgemisch 3-30 Gew.-%, vorzugsweise 5-20 Gew.-% beträgt.

4. Flüssigkristallines Gemisch nach einem der Ansprüche 1 bis 3, dadurch gekennzeichnet, dass der Anteil an Verbindungen der Formel I im Gesamtgemisch mindestens 25 Gew.-%, vorzugsweise mindestens 35 Gew.-% beträgt.

5. Flüssigkristallines Gemisch nach einem der Ansprüche 1 bis 4, dadurch gekennzeichnet, dass es eine oder mehrere Verbindungen der allgemeinen Formel

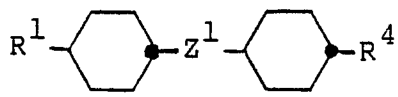

Ia

worin $R^4$ $C_1$-$C_{12}$-Alkyl, $C_1$-$C_{12}$-Alkoxy, $C_2$-$C_{12}$-Alkenyl oder $C_3$-$C_{12}$-Alkenyloxy bedeutet, und $R^1$ und $Z^1$ die in Anspruch 1 gegebenen Bedeutungen haben,
in einer Gesamtmenge von mindestens 10 Gew.-% vorzugsweise mindestens 15 Gew.-% enthält.

6. Flüssigkristallines Gemisch nach einem der Ansprüche 1 bis 5, dadurch gekennzeichnet, dass es eine oder mehrere Verbindungen der allgemeinen Formel

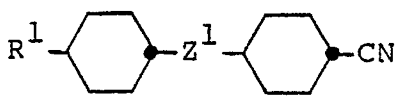

Ib

worin $R^1$ und $Z^1$ die in Anspruch 1 gegebenen Bedeutungen haben,
in einer Gesamtmenge von mindestens 5 Gew.-% enthält.

7. Flüssigkristallines Gemisch nach einem der Ansprüche 1 bis 6, dadurch gekennzeichnet, dass $R^1$ $C_1$-$C_{12}$-Alkyl, $C_2$-$C_{12}$-1E-Alkenyl, $C_4$-$C_{12}$-3E-Alkenyl oder $C_5$-$C_{12}$-4-Alkenyl, vorzugsweise einen Rest mit höchstens 7 Kohlenstoffatomen bedeutet.

8. Flüssigkristallines Gemisch nach einem der Ansprüche 1 bis 7, dadurch gekennzeichnet, dass $R^2$ und $R^4$ $C_1$-$C_{12}$-Alkyl, $C_1$-$C_{12}$-Alkoxy, $C_2$-$C_{12}$-1E-Alkenyl, $C_4$-$C_{12}$-3E-Alkenyl, $C_5$-$C_{12}$-4-Alkenyl, $C_3$-$C_{12}$-2E-Alkenyloxy oder $C_4$-$C_{12}$-3-Alkenyloxy, vorzugsweise einen Rest mit höchstens 7 Kohlenstoffatomen, bedeuten oder $R^2$ auch Cyano bedeutet.

9. Flüssigkristallines Gemisch nach einem der Ansprüche 1 bis 8, dadurch gekennzeichnet, dass $R^3$ $C_1$-$C_{12}$-Alkyl, $C_2$-$C_{12}$-1E-Alkenyl, $C_4$-$C_{12}$-3E-Alkenyl oder $C_5$-$C_{12}$-4-Alkenyl, vorzugsweise einen Rest mit höchstens 7 Kohlenstoffatomen bedeutet.

10.Verwendung des flüssigkristallinen Gemisches gemäss Anspruch 1 für elektro-optische Zwecke.